# EUROPEAN PATENT APPLICATION

(11) **EP 4 407 766 A2**
(43) Date of publication of application: **31.07.2024**
(21) Application number: 24153932.9
(22) Date of filing: 25.01.2024
(51) Int. Cl.: H01M 50/204, H01M 50/247, H01M 50/296

(54) **BATTERY PACK TERMINAL**

(30) Priority: 25.01.2023 US 202363441077 P; 21.02.2023 US 202363486075 P; 06.03.2023 US 202363488659 P
(71) Applicant: Milwaukee Electric Tool Corporation, Brookfield, WI 53005 (US)
(72) Inventor: MIOSI, Anthony M., Brookfield, 53045 (US); JACKSON, Andrew J., Milwaukee, 53208 (US); RAPANT, Russell M., Menomonee Falls, 53051 (US); PETERS, Daniel A., Elkhorn, 53121 (US); FASSBENDER, Kyle C., Brookfield, 53005 (US)
(74) Representative: Forresters IP LLP

(57) **Abstract**

A battery pack for use with a power tool having an electric connector. The battery pack including a housing containing one or more battery cells, a first terminal in electrical communication with the battery cells, the first terminal including a pair of spaced apart terminal walls forming a gap therebetween and a coil spring at least partially positioned within the gap. Where the coil spring is configured to selectively engage and form an electrical connection with the electric connector of the power tool when the electric connector is at least partially positioned within the gap.

## Description

### CROSS-REFERENCE TO RELATED APPLICATIONS

The present applications claims priority to U.S. Patent Application No. 63/441,077, filed January 25, 2023; U.S. Patent Application No. 63/486,075, filed February 21, 2023; and U.S. Patent Application No. 63/488,659, filed March 6, 2023. The entire contents of each application is hereby incorporated by reference.

### FIELD OF THE INVENTION

The present disclosure relates to battery pack terminal connections.

### BACKGROUND

Power tools can receive a battery pack that are also compatible with a number of other power tools and electrical devices. The battery pack includes a tool engagement portion and a circuit board. The tool engagement portion mechanically retains the battery pack to the power tool. The circuit board electrically connects the battery pack to the power tool using a plurality of terminals.

### SUMMARY

The disclosure provides, in one aspect, a battery pack for use with a power tool and comprising a housing containing one or more battery cells, a circuit board disposed in the housing, a first terminal, and a second terminal. The circuit board is in electrical communication with one or more battery cells. The first terminal is in electrical communication with the circuit board. The second terminal is also in electrical communication with the circuit board and is constructed differently from the first terminal. The second terminal includes a pair of spaced apart terminal walls, and a coil spring disposed in between the pair of spaced apart walls. The coil spring configured to engage and electrically couple with a portion of the power tool.

The disclosure provides, in another aspect, a battery pack for use with a power tool and comprising a housing containing one or more battery cells, a circuit board disposed in the housing, and a terminal. The circuit board is in electrical communication with one or more battery cells. The terminal is in electrical communication with the circuit board and is configured to receive and electrically couple to a portion of the power tool. The terminal assembly includes a pair of outer prongs and a pair of inner prongs nested within the outer prongs. Each of the inner prongs have a different shape than the outer prongs.

The disclosure provides, in another aspect, a battery pack for use with a power tool and comprising a housing containing one or more battery cells, a plurality of terminals, and a plurality of lateral terminals. The housing including a tool engagement portion with a pair of spaced apart housing walls configured to mechanically engage and retain a portion of the power tool. The terminals are disposed between the pair of housing walls. The lateral terminals are configured to conduct electricity through an opening in a respective housing wall of the pair of spaced part housing walls.

The disclosure provides, in another aspect, a battery pack for use with a power tool having an electric connector. The battery pack including a housing containing one or more battery cells, a first terminal in electrical communication with the battery cells, the first terminal including a pair of spaced apart terminal walls forming a gap therebetween and a coil spring at least partially positioned within the gap. Where the coil spring is configured to selectively engage and form an electrical connection with the electric connector of the power tool when the electric connector is at least partially positioned within the gap.

Alternatively or additionally, in any combination, where the coil spring is canted.

Alternatively or additionally, in any combination, where the electric terminal is introduced into the gap in a first insertion direction, and where the coil spring is canted such that it produces a compression direction that is perpendicular to the direction of insertion.

Alternatively or additionally, in any combination, the battery pack further includes a circuit board disposed in the housing that is in electrical communication with the one or more battery cells and the first terminal.

Alternatively or additionally, in any combination, where the first terminal includes a pair of legs mounted to the circuit board.

Alternatively or additionally, in any combination, where at least one terminal wall defines a groove therein, and where the spring is at least partially positioned within the groove.

Alternatively or additionally, in any combination, where both terminal walls define a groove therein, and where the spring is at least partially positioned in both grooves.

Alternatively or additionally, in any combination, where the first terminal defines a midplane positioned equidistant from both terminal walls, and where the coil spring is positioned on both sides of the midplane.

Alternatively or additionally, in any combination, where the coil spring is arranged in a U-shape.

The disclosure provides, in another aspect, a battery pack for use with a power tool having an electric connector, the battery pack including a housing containing one or more battery cells therein, a terminal in electrical communication with the battery cells, the terminal configured to receive and form an electrical connection with the electrical connector of the power tool, the terminal including a pair of outer prongs, and a pair of inner prongs nested between the pair of outer prongs.

Alternatively or additionally, in any combination, where the pair of outer prongs have a different shape than the pair of inner prongs.

Alternatively or additionally, in any combination, where the pair of outer prongs and the pair of inner prongs are both formed from a single piece of monolithic material.

Alternatively or additionally, in any combination, where the pair of outer prongs and the pair of inner prongs are electrically isolated from each other.

Alternatively or additionally, in any combination, where the pair of outer prongs has a first insertion depth, where the pair of inner prongs has a second insertion depth, and where the first insertion depth is less than the second insertion depth.

Alternatively or additionally, in any combination, where the pair of outer prongs define a first insertion axis parallel to a direction of insertion, where the pair of inner prongs define a second insertion axis parallel to a direction of insertion, and where the first insertion axis is not co-axial with the second insertion axis.

Alternatively or additionally, in any combination, where the pair of outer prongs and the pair of inner prongs are both coupled to a circuit board, where the first insertion axis is spaced a first distance from the circuit board, and where the second insertion axis is spaced a second distance from the circuit board that is greater than the first distance.

Alternatively or additionally, in any combination, where the pair of outer prongs has a different insertion depth than the pair of inner prongs.

Alternatively or additionally, in any combination, further comprising a second terminal in electrical communication with the battery cells, and wherein the second terminal is different than the first terminal.

Alternatively or additionally, in any combination, where the pair of inner prongs are interdigitated.

The disclosure provides, in another aspect, a battery pack for use with a power tool having an electrical connector, the battery pack including a housing containing one or more battery cells therein, the housing having a tool engagement portion configured to releasably engage the power tool and define a direction of insertion, and a lateral terminal configured to form an electrical connection with the electrical connector of the power tool, where the lateral terminal is accessible through the housing via a window, and where the window is oriented parallel to the direction of insertion.

Alternatively or additionally, in any combination, where the housing further defines a pair of grooves configured to mechanically engage and retain a portion of the power tool therein, and where the grooves extend parallel to the direction of insertion.

Alternatively or additionally, in any combination, where the window is positioned in one of the pair of grooves.

Alternatively or additionally, in any combination, further comprising one more terminals positioned between the pair of grooves.

Alternatively or additionally, in any combination, further comprising one or more terminals accessible via openings in the housing, and where the openings in the housing are at least partially oriented normal to the axis of insertion.

Other aspects of the invention will become apparent by consideration of the detailed description and accompanying drawings.

### BRIEF DESCRIPTION OF THE DRAWINGS

FIG. 1 illustrates a perspective view of a battery pack.
FIG. 1A illustrates an end section view of the battery pack of FIG. 1.
FIG. 2 illustrates a detailed perspective view of a plurality of connectors of a power tool with a portion of a power tool housing cut away.
FIG. 3 illustrates a perspective view of a circuit board including a terminal separator.
FIG. 4 illustrates a perspective view of the circuit board omitting the terminal separator.
FIG. 5 illustrates a perspective view of the circuit board engaging the plurality of connectors from the power tool housing.
FIG. 6A illustrates a perspective view of a second terminal.
FIG. 6B illustrates a front view of a second terminal of FIG. 6A.
FIG. 7A illustrates a perspective view of an alternate embodiment of a second terminal.
FIG. 7B illustrates a front view of the second terminal of FIG. 7A.
FIG. 8A illustrates a perspective view of an alternate embodiment of a second terminal.
FIG. 8B illustrates a front view of the second terminal of FIG. 8A.
FIG. 9A illustrates a perspective view of an alternate embodiment of a second terminal.
FIG. 9B illustrates a front view of the second terminal of FIG. 9A receiving the connector from the power tool housing.
FIG. 9C illustrates a perspective view of an inner terminal of the second terminal of FIG. 9A.
FIG. 10A illustrates a perspective view of an alternate embodiment of a second terminal.
FIG. 10B illustrates a front view of the second terminal of FIG. 10A receiving the connector from the power tool housing.
FIG. 10C illustrates a perspective view of an inner terminal of the second terminal of FIG. 10A.
FIG. 11 illustrates a perspective view of an alternate embodiment of a second terminal.
FIG. 12 illustrates a perspective view of the second terminal of FIG. 11 receiving the connector of the power tool housing.
FIG. 13 illustrates a perspective view of an alternate embodiment of a circuit board including an alternate embodiment of a second terminal.
FIG. 14 illustrates a top view of the circuit board and the second terminal of FIG 13.
FIG. 15 illustrates a perspective view of an alternate embodiment of a plurality of connectors of a power tool housing.
FIG. 16A illustrates an internal view of a first connector of the power tool housing of FIG. 15 engaged with the second terminal of FIG. 13.
FIG. 16B illustrates an internal view of a second connector of the power tool housing of FIG. 15 engaged with the second terminal of FIG. 13.
FIG. 17 illustrates a perspective view of an alternate embodiment of a second terminal.
FIG. 18 illustrates a perspective view of an internal terminal of the second terminal of FIG. 17.
FIG. 19A illustrates a section view of the second terminal of FIG. 17 receiving a second connector of the power tool housing.
FIG. 19B illustrates a section view of second terminal of FIG. 17 engaging a vertical connector of the power tool housing.
FIG. 20 illustrates a perspective view of an alternate embodiment of a circuit board including an alternate embodiment of a second terminal.
FIG. 21 illustrates a perspective view of an alternate embodiment of a plurality of second connectors and a plurality of split connectors of a power tool housing.
FIG. 22A illustrates an internal view of the second terminal of FIG. 20 engaging a split connector of the power tool housing of FIG. 21.
FIG. 22B illustrates an internal view of the second terminal of FIG. 20 engaging a second connector of the power tool housing of FIG. 21.
FIG. 23A illustrates a perspective view of an alternate embodiment of a top side of a circuit board.
FIG. 23B illustrates a perspective view of a bottom side of the circuit board of FIG. 23A.
FIG. 24A illustrates a perspective view of an alternate embodiment of a top side of a circuit board.
FIG. 24B illustrates a perspective view of a bottom side of the circuit board of FIG. 24A.
FIG. 25A illustrates a bottom view of the bottom of the circuit board of FIG. 24A including a bottom PCB cover.
FIG. 25B illustrates a top view of the bottom of the circuit board of FIG. 24A omitting the bottom PCB cover.
FIG. 26A illustrates a perspective view on an alternate embodiment of a battery pack.
FIG. 26B illustrates another perspective view of the battery pack of FIG. 26A.
FIG. 27A illustrates a bottom view of an alternate embodiment of circuit board.
FIG. 27B illustrates a perspective view of the circuit board of FIG. 27A and a lateral terminal.
FIG. 27C illustrates another perspective view of the circuit board of FIG. 27A and the lateral terminal.
FIG. 28 illustrates a detailed perspective view of an alternate embodiment of connectors of a power tool with a portion of a power tool housing cut away.
FIG. 29 illustrates a cut-away view of the battery pack engaged with the power tool.
FIG. 30 illustrates many alternate embodiments of a terminal.
FIGS. 31 and 32 illustrate a canted coil spring.
FIG. 33 is a chart showing the deflection of the coil spring of FIG. 31 relative to the force applied thereto.
FIGS. 34A-34C illustrate alternative embodiment of a terminal.
FIGS. 35A-35C illustrate additional alternative embodiments of a terminal.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

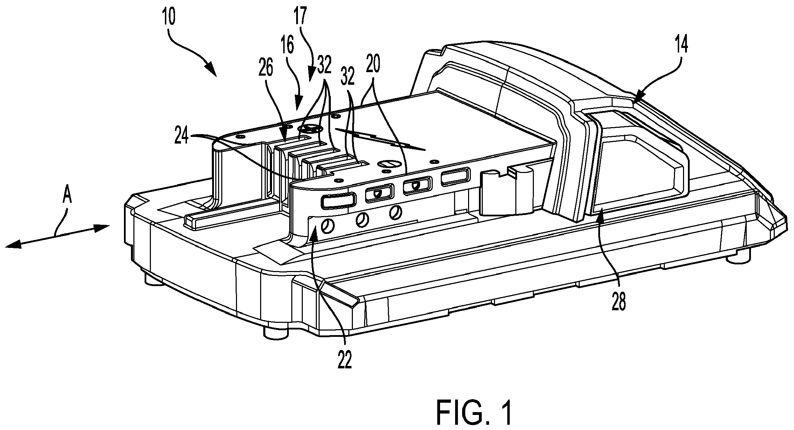

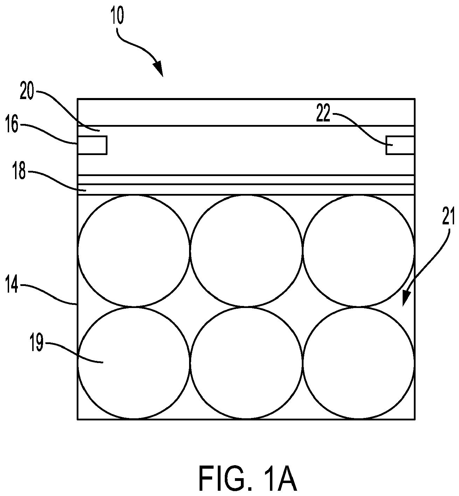

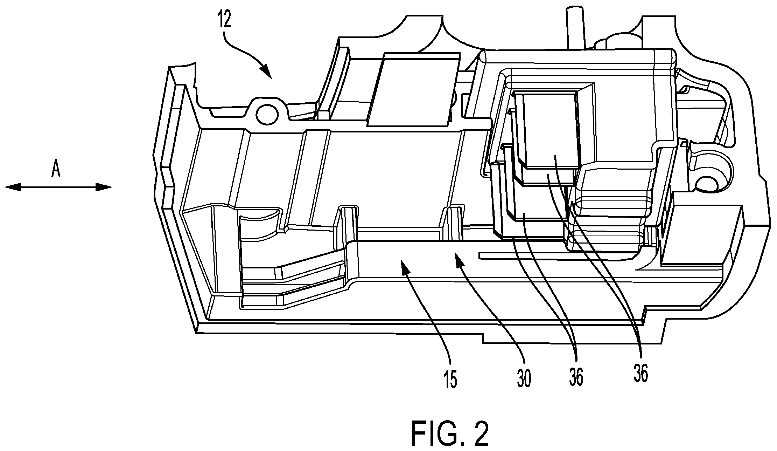

FIG. 1 and 1A illustrate a battery pack 10 that is configured to be releasably coupled to and form a temporary electrical connection with an electrical mounting point 15 of a power tool 12 or other electrical device (see FIG. 2).. More specifically, the battery pack 10 may provide electrical power to various elements of the power tool 12 including, but not limited to, one or more motors, sensors, LEDs, controllers, pumps, and the like.

The battery pack 10 includes a housing 14, a tool engagement portion 16, a circuit board 18, one or more battery cells 19, and an electrical interface 17 in electrical communication with both the circuit board 18 and the battery cells 19. The housing 14, in turn, at least partially defines an internal cavity21, which supports the battery cells 19 and the circuit board 18 therein.

The tool engagement portion 16 of the battery pack 10 is configured to selectively engage the mounting point 15 of the power tool 12. In the illustrated embodiment, the tool engagement portion 16 includes a pair of outer housing walls or ribs 20 extending parallel to the direction of insertion A, a groove 22 at least partially formed by the ribs 20 and also extending parallel to the direction of insertion A, a pair of inner housing walls 24 at least partially forming a terminal interface 26, and a pair of actuators or latches 28. The groove 22 and the actuators 28 are configured to mechanically engage and retain a corresponding rail 30 of the mounting point 15 of the power tool 12. In other embodiments, the groove 22 may be formed on the power tool 12 while the rail 30 may be formed on the battery pack 10.

The terminal interface 26 includes a plurality of slots 32 in the housing 14 each generally corresponding one or more terminals (discussed below) of the electrical interface 17. Each slot 3, in turn, is sized and shaped to receive one or more connectors 36 from the power tool 12 therein. As shown in FIG. 2, the plurality of first connectors 36 of the power tool 12 are disposed on the mounting point 15 and generally extend parallel to the direction of insertion A. In the illustrated embodiment, each connector 36 is generally formed as a planar plate with a beveled leading edge.

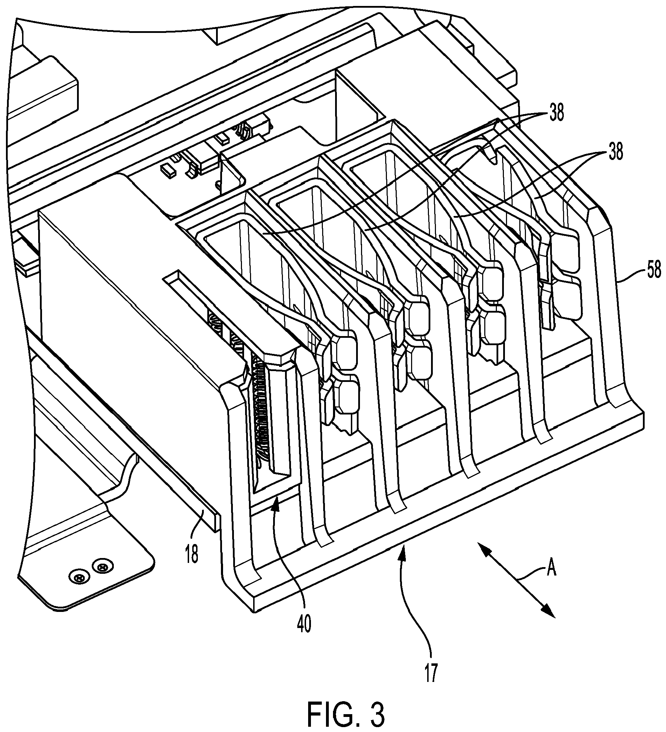

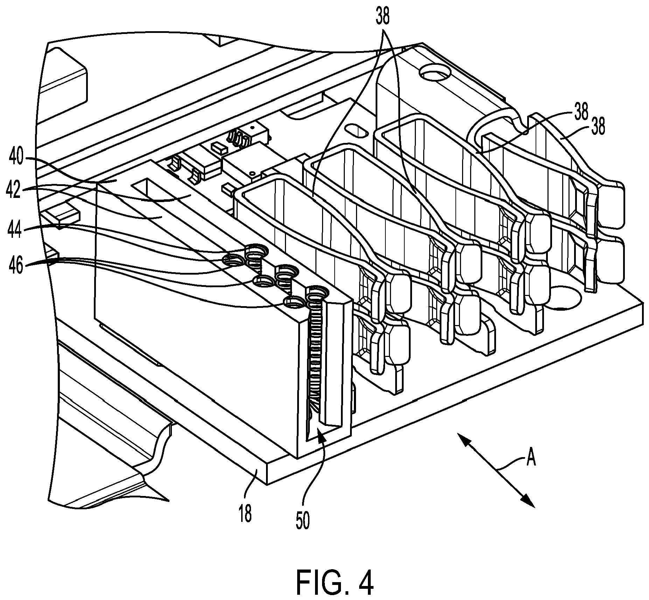

As shown in FIGS. 3-6B, the electrical interface 17 includes one or more first terminals 38, one or more second terminals 40, and a terminal separator 58 to physically and electrically isolate each terminal 38, 40 from one other. When assembled, each terminal 38, 40 is configured to align with an be accessed through a corresponding slot 32 of the terminal interface 26 (see FIG. 1).

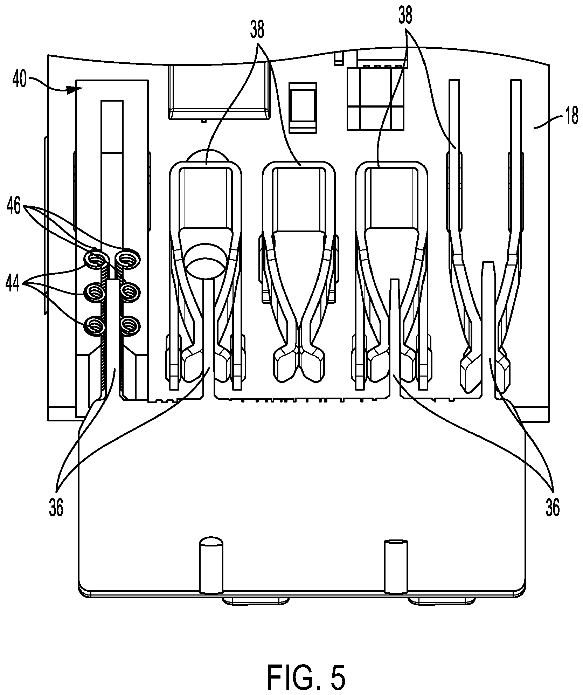

The terminals 38, 40 of the battery pack 10 are each physically sized and shaped to receive a respective one of the first connectors 36 from the power tool housing 12 therein to form an individual electrical connection therewith. Together, the electrical connections formed between the first connectors 36 and their respective terminals 36, 40electrically connect the power tool 12 to the circuit board 18 and the batteries 19, as shown in FIG. 5.

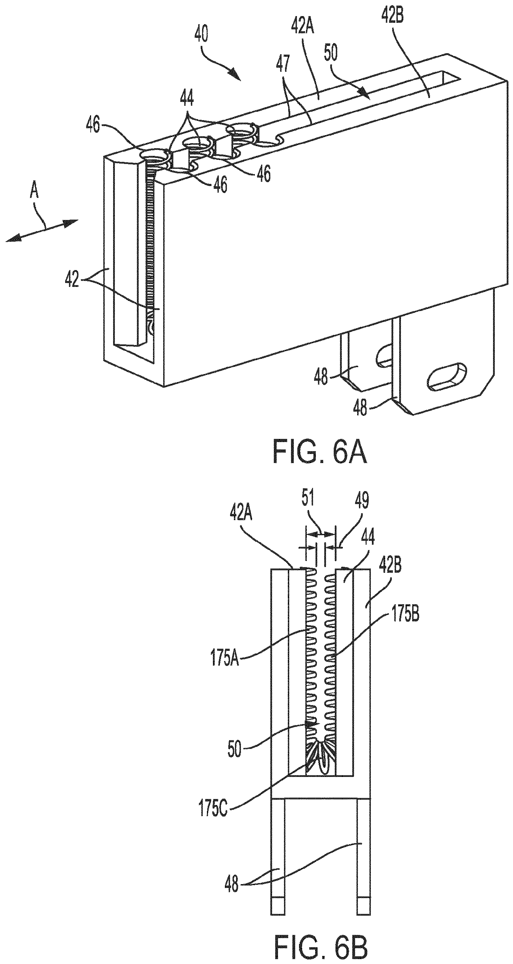

As shown in FIGS. 6A-B, the second terminal 40 is constructed differently than the first terminals 38. More specifically, the second terminal 40 includes a pair of spaced apart terminal walls 42 forming a terminal gap or opening 50 therebetween, and one or more coil springs 44 at least partially positioned within or open to the terminal gap 50. When assembled, each coil spring 44 is in electrical communication with the terminal walls 42 which in turn are in electrical communication with the circuit board 18 via a pair of legs 48.

In the illustrated embodiment, the terminal walls 42 are generally planar and spaced apart a distance such that the terminal gap 50 is sufficiently sized to receive a corresponding first connector 36 at least partially therein. The walls 42 also each define one or more spring retention grooves 46 formed into the interior surfaces 47 thereof that are sized and shaped to receive at least a portion of a corresponding coil spring 44 therein. When assembled, the terminal walls 42 and coil springs 44 are configured such that the coil springs 44 extend inwardly beyond the interior surfaces 47 of the walls 42 and into the gap 50 so that the coil distance 49 between opposing springs 44 is less than the distance between the walls 42 at the same location.

In some embodiments, one or more of the coil springs 44 of the second terminal 40 may be configured so that they more readily and consistently deflect when engaged by the first connector 36. More specifically, the coil springs 44 may be "canted" so that they apply a near constant force into and against the first connector 36 (e.g., in an inward direction toward the center of the gap 50) as the individual coils of the spring 44 are deflected outwardly to accommodate the presence of the connector 36 within the gap 50.

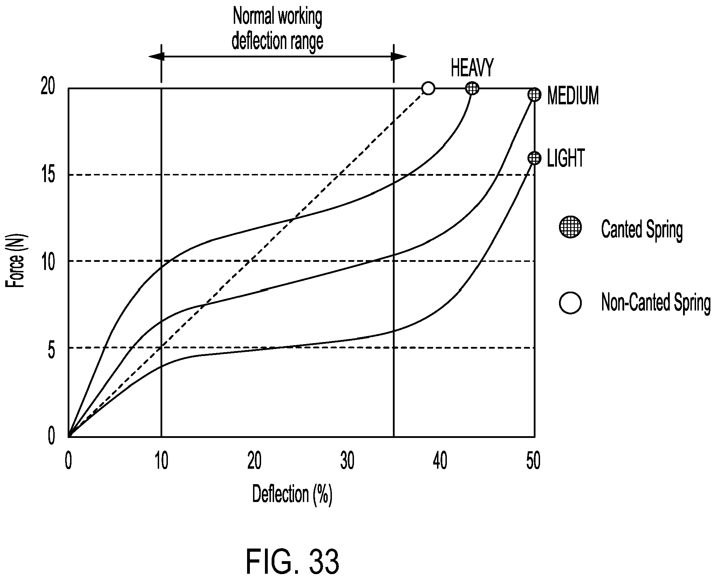

In some embodiments, the coil springs 44 are canted in the sense that they are sized and shaped to accommodate compression in a pre-determined compression direction B. More specifically, the geometry of the coil spring 44 is configured so that, when a force is applied to the spring 44 in the compression direction B the coil spring 44 exerts a near-constant reaction force when deflected over a working deflection range (see FIG. 33). In the illustrated embodiment, the working deflection range is between 10% and 35% of the resting spring height 61 in the direction of compression B. In other embodiments, the working deflection range is between approximately 10% and approximately 35% (e.g., ±1%, ±2%, ±5%, or ±10%) deflection of the resting spring height 61 in the direction of compression B. In still other embodiments, the force exerted by the coil spring 44 in the compression direction B varies by between 50% to 58% when deflected over a working deflection range of between 10% to 35% of the resting spring height 61 in the direction of compression B. In still other embodiments, the force exerted by the coil spring 44 in the compression direction B varies by between 50% to 55% when deflected over a working deflection range of between 10% to 35% deflection of the resting spring height 61 in the compression direction B. In still other embodiments, the force exerted by the coil spring 44 in the compression direction B varies by between 52% to 58% when deflected over a working deflection range of between 10% to 35% deflection of the resting spring height 61 in the direction of compression B.

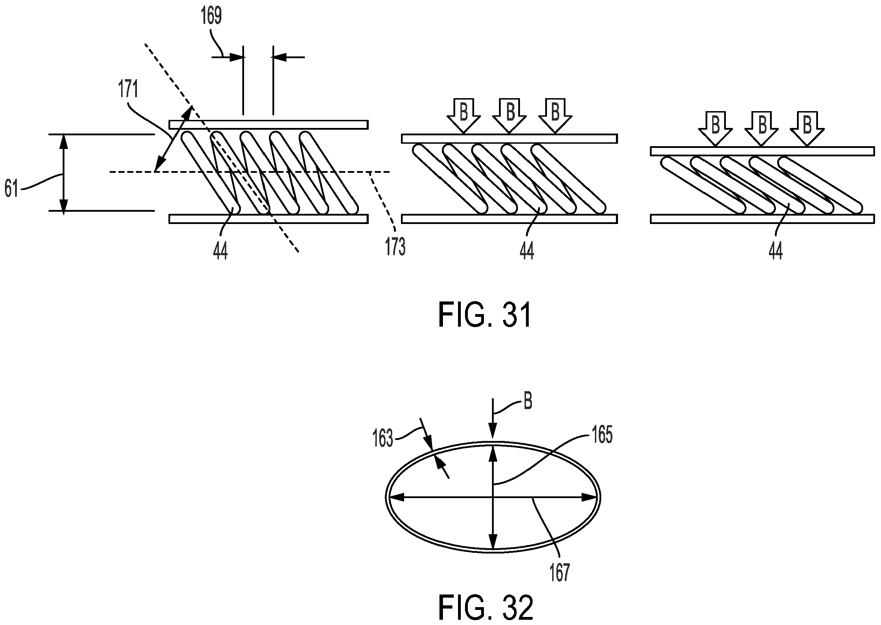

In still other embodiments, the coil springs 44 may be canted by modifying various characteristics of the spring's geometry such as the diameter of the wire 163, the coil height 165 relative to the coil width 167, the coil spacing 169, and the coil angle 171 (see FIGS. 31 and 32). More specifically, the illustrated coil springs 44 are configured such that the coil height 165 (e.g., the coil dimension in the direction of compression B) is less than the coil width 167 (e.g., the coil dimension perpendicular to the direction of compression B; see FIG. 32). Furthermore, the illustrated coil springs 44 are configured so that they have a decreased coil angle 171 relative to the axis 173 of the spring 44.

Compared to the first terminal 38, the second terminals 40 include more individual points of contact with the first connector 36 due to the coil spring 44 (e.g., one point of contact for each coil touching the connector 36). More specifically, the second terminal 40 has more than four points of contact with a particular connector 36. In other embodiments, an inner diameter of the coil spring 44 may be larger to be able to receive or transmit higher current. The terminal separator 58 is configured to electrically separate the first terminals 38 and the second terminals 40 to reduce the risk of a short circuit.

In the illustrated embodiment, the coil spring 44 is shaped such that it forms a substantially "U" shape within the gap 50 (see FIG. 6B). More specifically, the spring 44 is positioned so that there is a first leg 175A extending parallel along a first wall 42A, a second leg 175B extending parallel along the second wall 42B, and an interconnecting leg 175C extending between the first and second legs 175A, 175B proximate the bottom of the gap 50 (e.g., extending between the two walls 42A, 42B (see FIG. 6B). By doing so, the elastic nature of the coil spring 44 (e.g., to remain straight) provides an outward pressure against the two walls 42A, 42B helping to maintain the spring 44 in place within the terminal 40. As shown in FIG. 6A, the first and second legs 175A, 175B are positioned within the corresponding retention grooves 46 of the walls 42A, 42B, respectively, such that the grooves 46 provide lateral support to the spring 44. Specifically, the grooves 46 help to restrict any motion of the spring 44 along the direction of insertion A when a connector 36 is being inserted therein.

While the illustrated spring 44 is U-shaped so that both the first leg 175A and the second legs 175B are formed as a single piece. It is understood that in other embodiments the first and second legs 175A, 175B may be formed separately such that the interconnecting leg 175C does not exist. In such an embodiment, each leg 175A, 175B may be retained within the corresponding retention groove 46 mechanically (e.g., via the shape of the groove 46, the use of tabs, and the like) or through adhesives and the like. In still other embodiments, the spring 44 itself may form a continuous loop such that the single spring 44 forms the first leg 175A, the second leg 175B, the interconnecting leg 175C proximate the bottom of the gap 50, and a second interconnecting leg (not shown) proximate the top of the gap 50.

Once installed in the illustrated U-shaped configuration, the coil spring 44 may further be oriented so that the direction of compression B of the coil spring 44, when canted, lies perpendicular to the direction of insertion A for the first and second legs 175A, 175B of the spring 44.

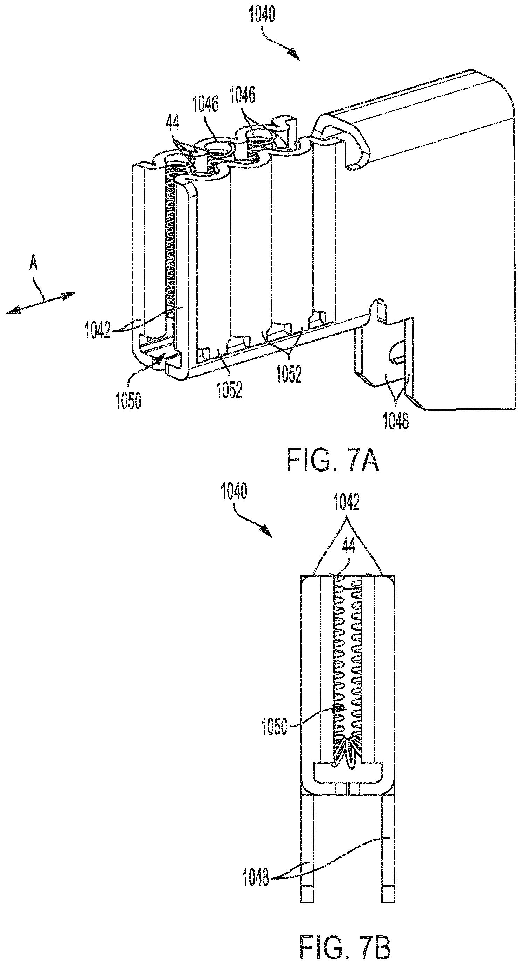

FIGS. 7A-B illustrate another embodiment of the second terminal 1040. The second terminal 1040 is substantially similar to the second terminal 40 so only the differences will be discussed in detail herein. The second terminal 1040 includes a pair of terminal walls 1042 with one or more curved portions 1052. The curved portions 1052, in turn, define a plurality of spring retention grooves 1046, which retain the coil springs 44 as discussed above. More specifically, the curved nature of the walls 1042 allow the presence of the retention grooves 1046 while maintaining a constant wall thickness. As such, the illustrated walls 1042 may be formed from a single piece sheet material that is pressed or otherwise formed into shape. Indeed, the entire terminal 1040 is configured so that it may be formed from a single piece of formed sheet material.

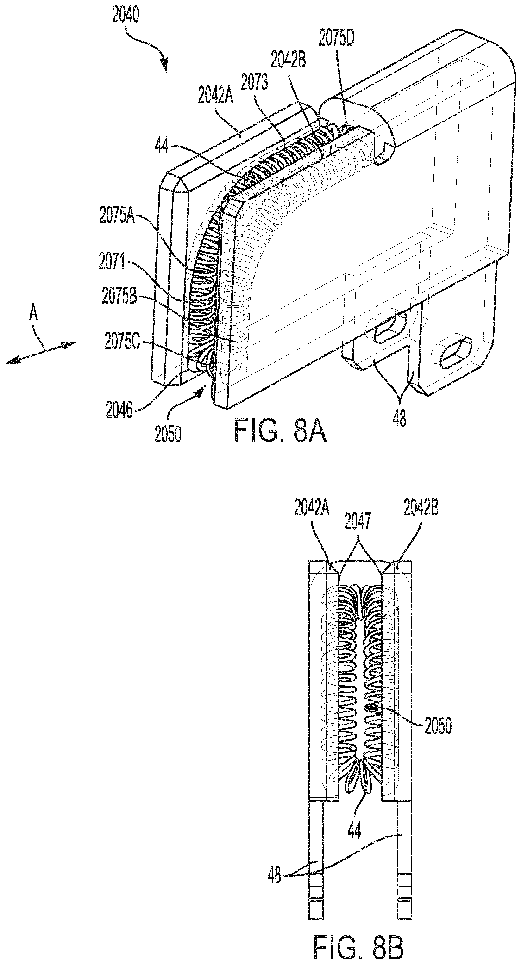

FIGS. 8A-B illustrate another embodiment of the second terminal 2040. The second terminal 2040 is substantially similar to the second terminal 40 so only the differences will be discussed in detail herein. The second terminal 2040 includes a pair of retention grooves 2046 that each form a curvilinear path along the inner surface 2047 of their corresponding wall 2042A, 2042B. More specifically, each retention groove 2046 includes a first portion 2071 that is oriented generally perpendicular to the direction of insertion A (e.g., ±1%, ±2%, ±5%, or ±10%) and a second portion 2073 that is oriented generally parallel to the direction of insertion A (e.g., ±1%, ±2%, ±5%, or ±10%). As such, the coil spring 44 positioned within the grooves 2046 also include portions oriented generally perpendicular to and generally parallel to the direction of insertion A (e.g., ±1%, ±2%, ±5%, or ±10%)..

In the illustrated embodiment, the coil spring 44 forms a complete loop such that the spring 44 includes a first leg 2075A extending along the retention groove 2046 in the first wall 2042A, a second leg 2075B extending along the retention groove 2046 in the second wall 2042B, and a pair of interconnecting legs 2075C, 2075D extending between the walls 2042A, 2042B and interconnecting the first and second legs 2075A, 2075B. By doing so, the natural elastic nature of the coil 44 (e.g., to take on its resting circular shape) helps to retain the spring 44 within the grooves 2046 of the terminal 2040. In other embodiments, separate coil springs 44 may be used to extend along all or a portion of each retention groove 2046 and be retained therein such that no interconnecting portions are required or present.

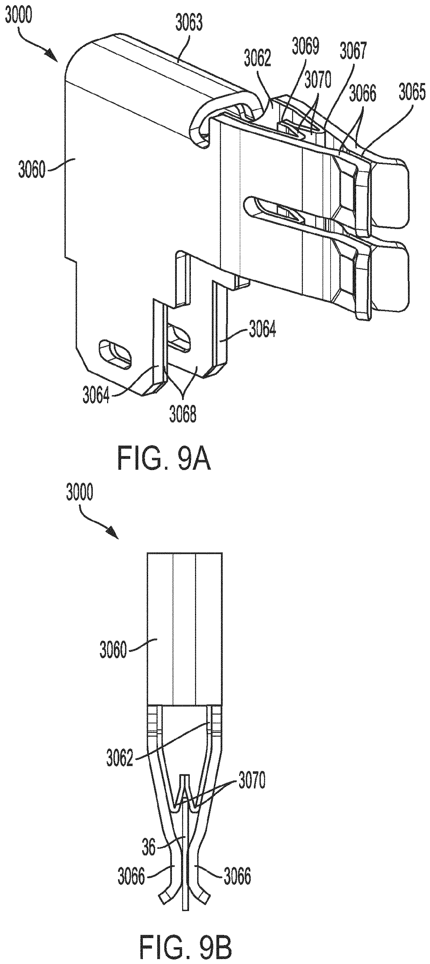

FIGS. 9A-C illustrate another embodiment of a terminal 3000. The terminal 3000 may be used in place of one or more of the second terminals 40or one of the first terminals 38 of the electrical interface 17. The terminal 3000 includes an outer terminal 3060 and an inner terminal 3062 nested within the outer terminal 3060 such that the two terminals 3060, 3062 form a single electrical connection. The outer terminal 3060 includes a first pair of legs 3064 and a pair of outer prongs 3066. The first pair of legs 3064 are inserted into the circuit board 18 and can be soldered to electrically connect the terminal 3000 to the circuit board 18. The outer prongs 3066 are configured to electrically connect and engage a corresponding first connector 36 from the power tool housing 12 to the circuit board 18. As shown in FIG. 9A and 9B, as the outer prongs 3066 extend from the base 3063 of the terminal 3000, the prongs 3066 first come together to form a pinch point 3065, where they then form a forward-splayed shape such that the ends of the prongs extend forward and expand away from each other as they extend away from the corresponding pinch point 3065. In the illustrated embodiment, the outer terminal 60 is formed out of a conductive material with a thickness between 0.15 mm and 0.35 mm. In some embodiments, the thickness is between 0.2 mm and 0.3 mm. In some embodiments, the thickness is 0.25 mm.

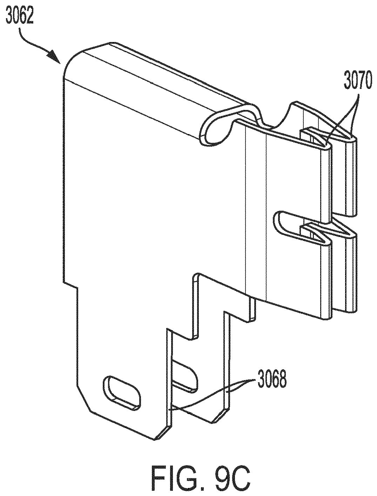

The inner terminal 3062, shown in FIG. 9C, is nested inside the outer terminal 3060 and includes a second pair of legs 3068 and a pair of inner prongs 3070. The second pair of legs 3068 are also inserted into the circuit board 18 and are soldered to electrically connect the inner terminal 3062 to the circuit board 18. The pair of inner prongs 3070 have a different shape than the outer prongs 3066. More specifically, the inner prongs 3070 are bent in a V shape and are configured to provide additional contact area for the first connector 36 when fully installed. As shown in FIGS. 9A and 9B, as the inner prongs 3070 extend from the base 3063 of the terminal 3000, the prongs 3070 first converge together to form a distal end 3067, the prongs then extend back toward the base 3063 where they continue to converge until they form a pinch point 3069. Stated differently, the pinch point 3069 is positioned closer to the base 3063 than the distal end 3065.

In some embodiments, the inner prongs 3070 are configured to limit an insertion depth of the first connector 36. In other embodiments, the inner prongs 3070 are configured to capture or otherwise clamp onto the connector 36. In such alternative embodiments, the clamping force of the inner prongs 3070 may be different than the clamping force exerted by the outer prongs 3066. By doing so, the user will receive tactile feedback to determine how far the connector 36 is inserted. More specifically, the clamping force exerted by the inner prongs 3070 may be greater than that exerted by the outer prongs 3066.

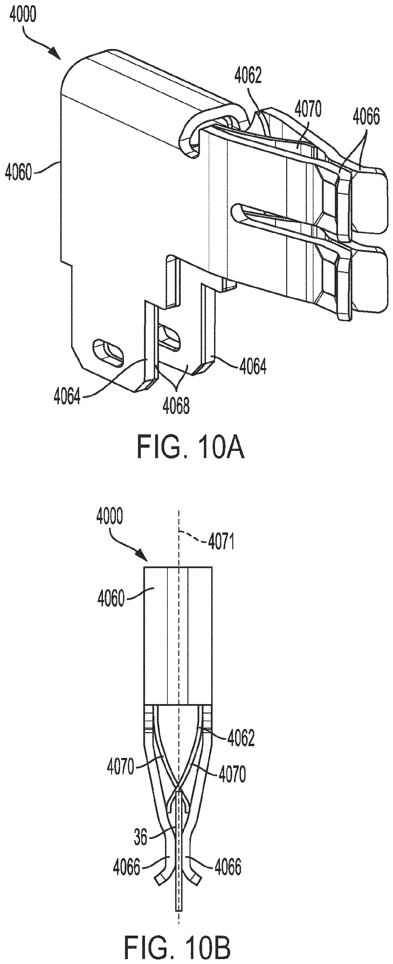

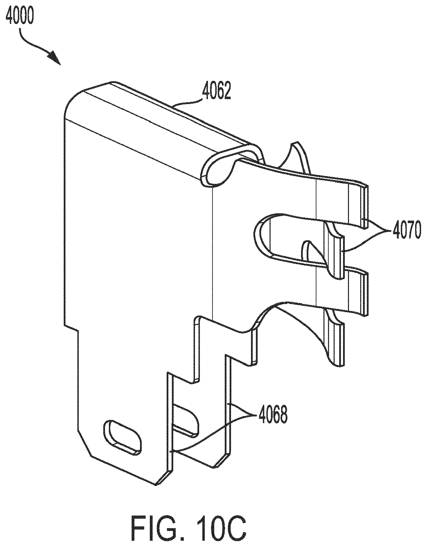

FIGS. 10A-C illustrate another embodiment of a terminal 4000. The terminal 4000 is substantially similar to the terminal 3000 so only the differences will be described in detail herein. The terminal 4000 includes an inner terminal 4062 having a pair of inner prongs 4070 bent to be interdigitated. Stated differently, the prongs 4070 are shaped so that they cross-over the midline 4071 of the terminal 4000 so that a prong 4070 originating on one side of the midline 4071 will terminate on the opposite side of the midline 4071. The inner prongs 4070 also receive the first connector 36 and increase the contact area between a second terminal 4000 and the first connector 36. In some embodiments, the inner prongs 4070 also limits the insertion depth of the first connector 36.

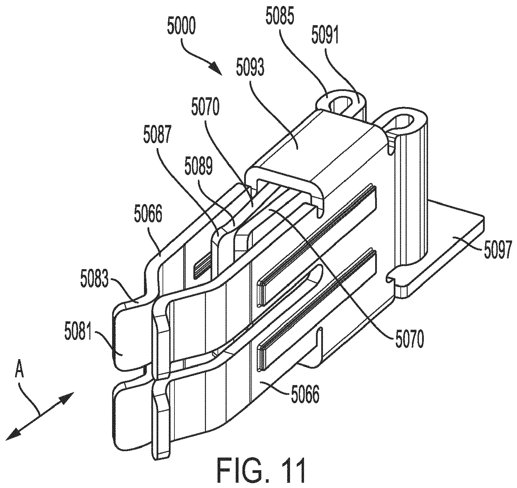

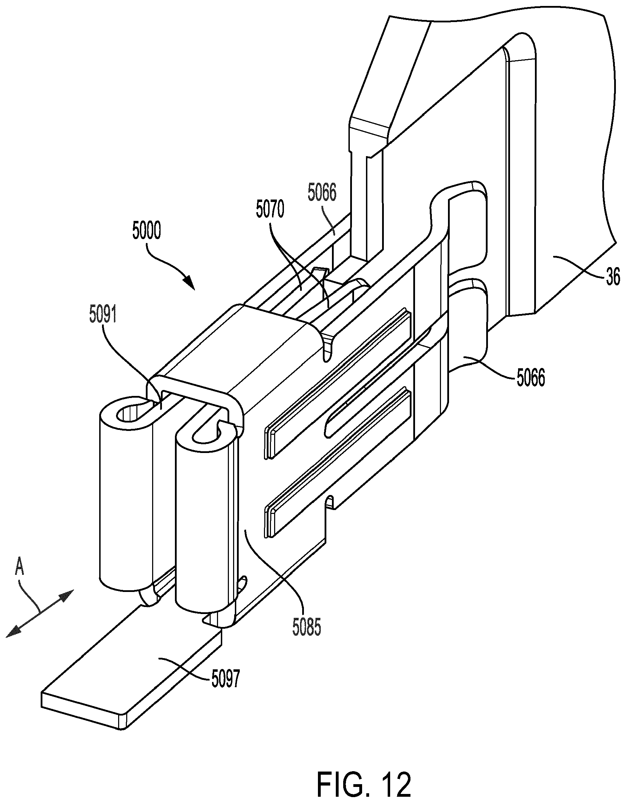

FIGS. 11-12 illustrate another embodiment of a terminal 5000.. The terminal 5000 may replace any one of the second terminals 40 or the first terminals 38 of the electrical interface 17. The terminal 5000 is formed from a single piece of sheet material (e.g., metal) and forms a pair of outer prongs 5066, a pair of inner prongs 5070 nested inside the outer prongs 5066, and a mounting portion 5097. The outer prongs 5066 are configured to receive and electrically connect a first connector 36 to the circuit board 18, as shown in FIG. 12. In some embodiments, the inner prongs 5070 are configured to limit an insertion depth of the first connector 36 into the second terminal 5000. In other embodiments, the inner prongs 5070 serve as a second clamping point to increase electrical connection surface area and retention strength of the terminal 5000. Since the inner prongs 5070 are nested in the outer prongs 5066, the second terminal 5000 allows for increased contact area without increasing the length of the outer prongs 5066 (e.g., in a direction parallel to the direction of insertion A) or compromising the area of each contact area. The mounting portion 5097 electrically connects and supports the second terminal 5000 on a circuit board 18.

As shown in FIGS. 11 and 12, the terminal 5000 is configured so that the outer prongs 5066, the inner prongs 5070, and the mounting portion 5097 may all be formed from a single piece of sheet material by bending and forming that single sheet. More specifically, the outer prongs 5066 have a first or distal end 5081 forming a first clamping or pinch point 5083, and a second end 5085 opposite the first end 5081. The inner prongs 5070 originate at the second end 5085 of the outer prongs 5066 whereby a 180 degree fold allows the inner prongs 5070 to extend in generally the same direction as the outer prongs 5066 while being nested within the outer prongs 5066. Stated differently, the inner prongs 5070 also include a distal end 5087 forming a second clamping or pinch point 5089, and a second end 5091 opposite the first end 5087. As shown in FIG. 12, the second end 5091 of the inner prongs 5070 and the second end 5085 of the outer prongs 5066 are connected such that the inner and outer prongs 5070, 5066 may be formed by a single monolithic piece of material. In some embodiments, the connection of the two second ends 5085, 5091 is formed by a 180-degree bend in the monolithic material.

The terminal 5000 also includes a cross-over or bridge portion 5093 extending between the two outer prongs 5066 and being continuous with both. The cross-over is positioned such that it does not interfere with the gap 5050 into which the connector 38 is to be inserted. In the illustrated embodiment, the bridge 5093 is positioned and shaped (e.g., proximate the second ends 5085 of the outer prongs 5066) so that the two individual outer prongs 2066 are connected and therefore can be formed from a single piece of monolithic material. More specifically, the bridge 5093 may include two approximately 90-degree folds on either end thereof to allow the outer prongs 5066 to be placed generally parallel to and spaced a distance from each other.

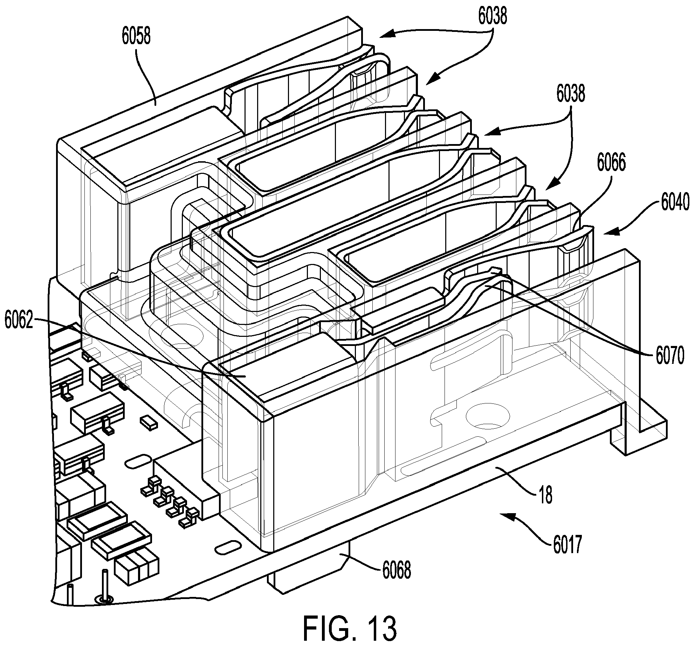

FIGS. 13-14 illustrate an alternate embodiment of an electrical interface 6017. The electrical interface 6017 is substantially similar to the electrical interface 17 described above so only the differences will be described in detail herein. The electrical interface 6017 may replace the electrical interface 17 in the battery pack 10. The circuit board 6018 includes a plurality of first terminals 6038, a plurality of second terminals 6040, and a terminal separator 6058.

In the illustrated embodiment, the first terminals 6038 and the second terminals 6040 are configured so that they may each receive and form different types of electrical connections with different constructions of connectors 36. More specifically, the first terminals 6038 can receive a first connector 6036 from the power tool 12 while the second terminals 6040 can receive a first connector 6036 or a second connector 6037 from the power tool housing 6012 (discussed below).

Furthermore, each first terminal 6038 may only form a single electrical connection point (e.g., the first terminal 6038 can form a single electrical circuit) while each second terminal 6074 is form one or multiple electrical connection points (e.g., the second terminals 6074 may form two or more independent electrical circuits). When docked to the mounting point 6015, the first terminals 6038 may form a single electrical connection with both the first connector 6036 and the second connector 6037 while the second terminal 6040 may form a single electrical connection with the first connectors 6036 and form two electrical connections with the second connectors 6040.

The terminal 6040 includes an outer terminal 6060 and an inner terminal 6062 nested within and electrically isolated from the outer terminal 6060. The outer terminal 6060 includes a first pair of legs 6064 soldered to the circuit board 18, and a pair of outer prongs 6066 having a first connection depth 6071. The outer terminal 6060 is configured to receive and electrically connect with the first connector 6036 or the second connector 6037 to the circuit board 18.

The inner terminal 6062 includes a second pair of legs 6068 soldered to a different location on the circuit board 18 than the first pair of legs 6064, and a pair of inner prongs 6070 having a second connection depth 6073 that is different than the first connection depth 6071. More specifically, the second connection depth 6073 is greater than the first connection depth 6071. The inner terminal 6062 is configured to only receive and electrically connect to the second connector 6037.

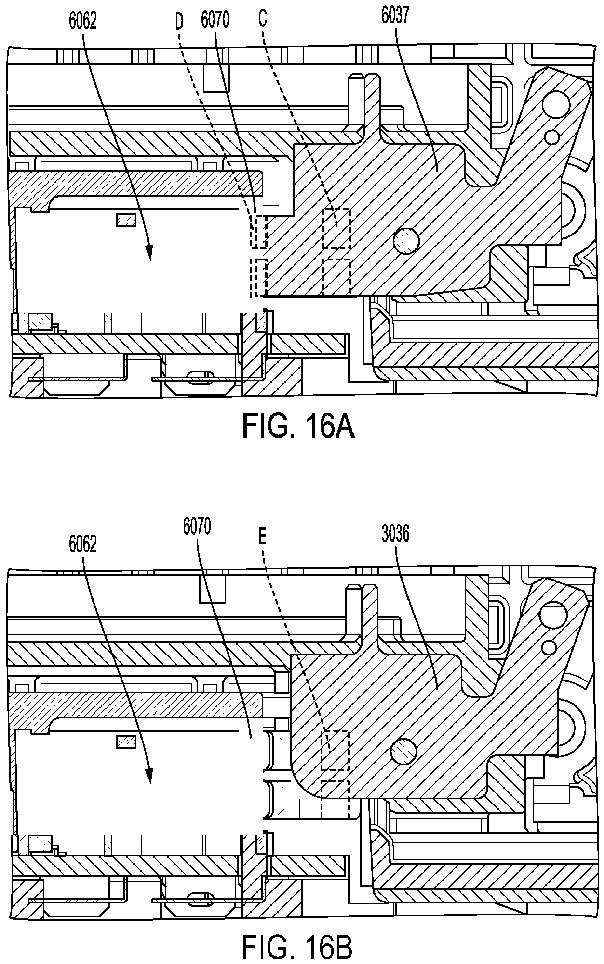

As shown in FIG. 16A, the second connector 6037 is installed into the second terminal 6040 and both the outer terminal 6060 and inner terminal 6062 engage and form an electrical connection therewith (e.g., see connection point C between the connector 6037 and the outer terminal 6060, and connection point D between the connector 6037 and the inner terminal 6062). In contrast, FIG. 16B shows the first connector 6036 installed in the second terminal 6040 and only forms an electrical connection with the outer terminal 6060 (see connection point E between the outer terminal 6060 and the connector 6036). More specifically, since the first connector 6036 has an insertion length 6039 that is shorter than the insertion length 6041 of the second connector 6037, the first connector 6036 only engages with the outer terminal 6060 of the second terminal 6040.

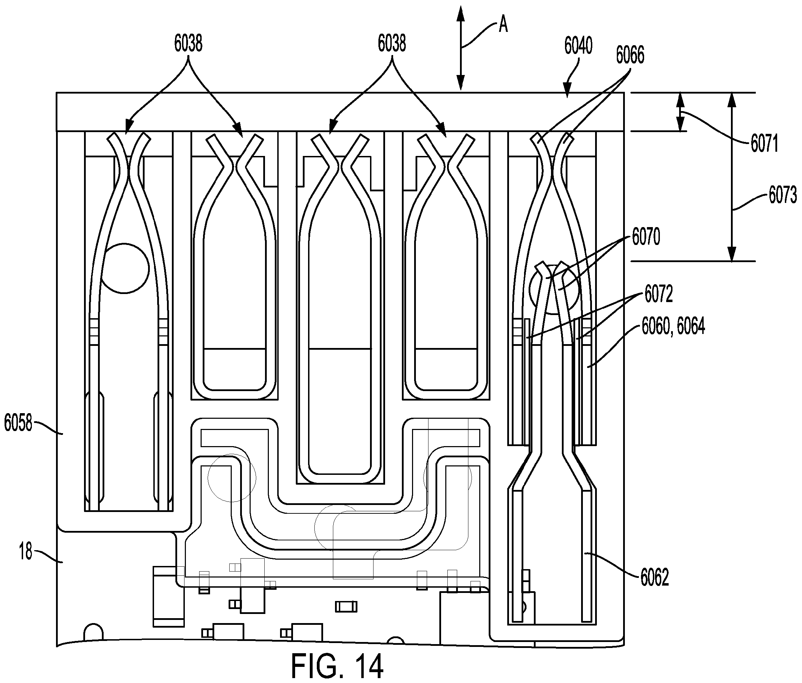

As shown in FIG. 14, the second terminal 6040 includes a shim or insulator 6072 positioned between the inner terminal 6062 and the outer terminal 6060 so that the two terminals remain electrically isolated from each other. In the illustrated embodiment, the shim 72 is made of mica. In other embodiments, the shim 72 could be made from any electrically insulative material.

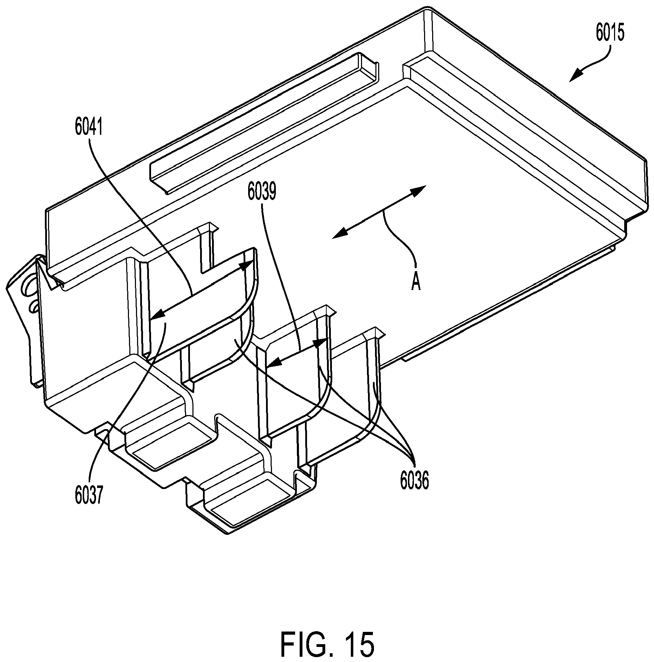

FIG. 15 illustrates another embodiment of the mounting point 6015 of the power tool 12. The mounting point 6015, in turn includes one or more first connectors 6036 having a first insertion length 6039 (e.g., the length of the connector 6036 measured in the direction of insertion A), and one or more second connectors 6037 having a second insertion length 6041 that is different than the first insertion length 6039. More specifically, the second insertion length 6041 is greater than the first insertion length 6039. During use, the first connectors 6036 have sufficient insertion length 6039 to form an electrical connection with the outer terminal 6060 of the second terminal 6040 and the first terminal 6038 but to not form an electrical connection with the inner terminal 6062 of the second terminal 6040. In contrast, the second connectors 6037 have a sufficient insertion length 6041 to form an electrical connection with the inner and outer terminals 6062, 6060 of the second terminal 6040 and the first terminal 6038.

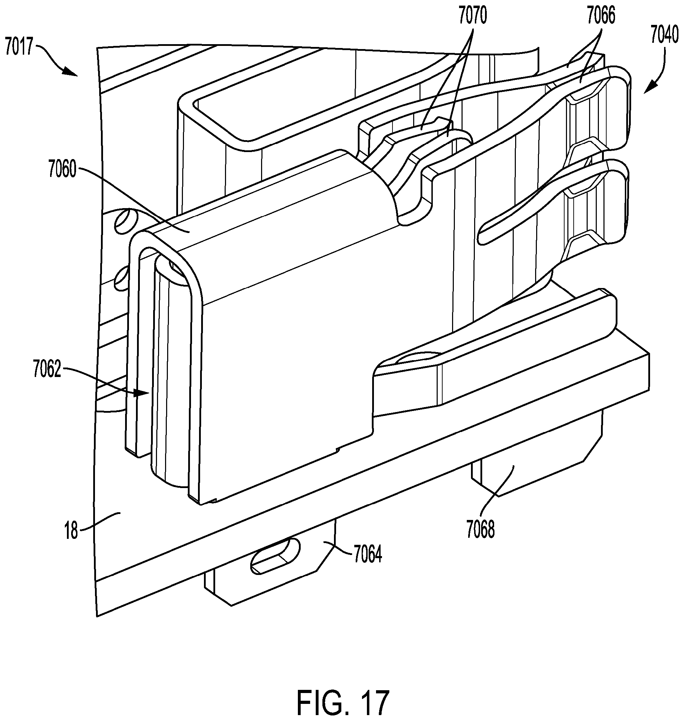

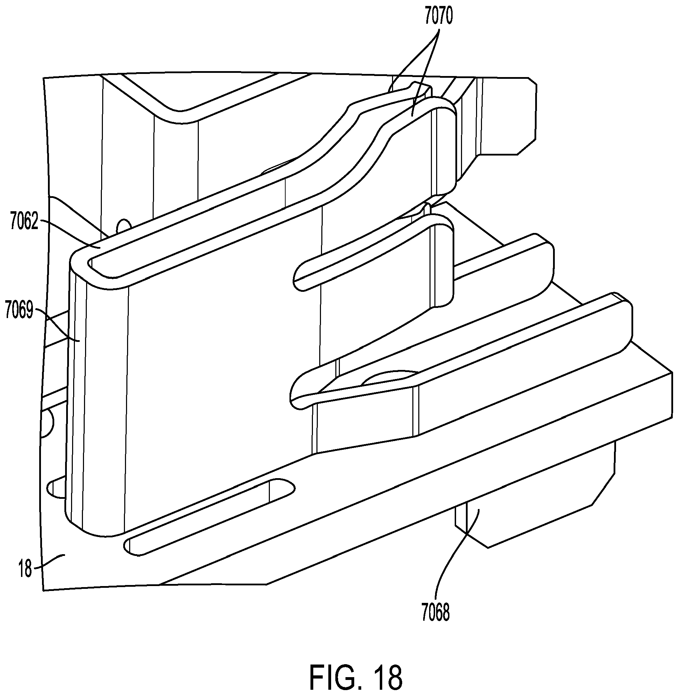

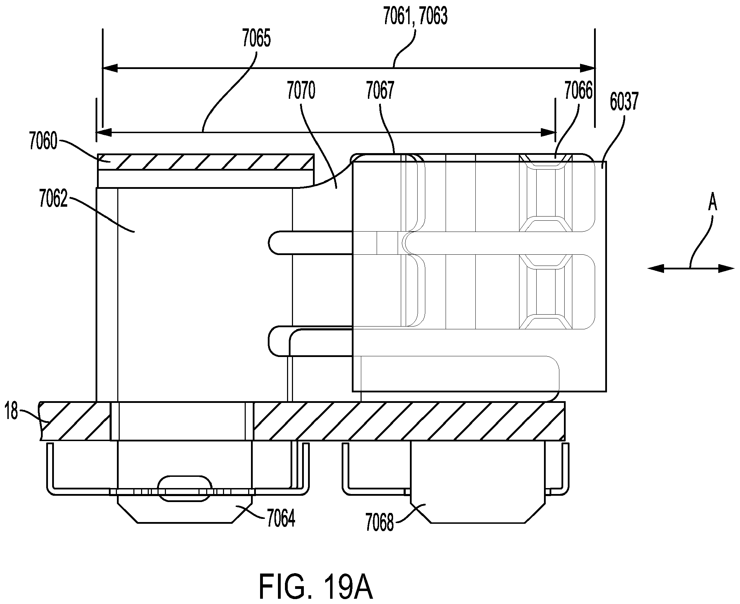

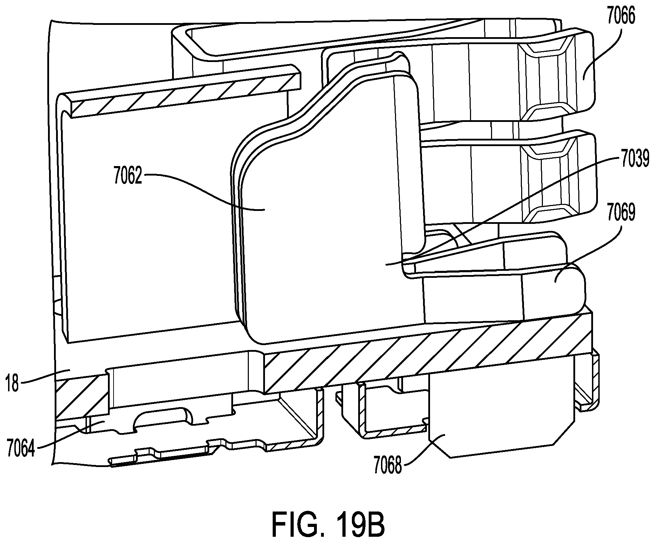

FIGS. 17-19B illustrate another embodiment of an electrical interface 7017. The electrical interface 7017 is substantially similar to the electrical interface 6017 so only the differences will be described in detail herein. The electrical interface 7017 may replace the electrical interface 17 in the battery pack 10. The electrical interface 7017 includes a second terminal 7040 that includes an outer terminal 7060 and an inner terminal 7062. The outer terminal 7060 includes a first pair of legs 7064 soldered to the circuit board 18 and a pair of outer prongs 7066. As shown in FIGS. 18 and 19, the inner terminal 7062 includes a second pair of legs 7068 soldered to the circuit board 18 and a pair of inner prongs 7070.

Compared to the outer terminal 7060, the inner terminal 7062 includes an alternate placement of a second pair of legs 7068 to reduce the overall footprint of the second terminal 7040 on the circuit board 18. More specifically, the illustrated outer terminal 7060 defines a length envelope 7061 extending in the direction of insertion A (see FIG. 19A). The inner terminal 7062 is configured so that the second pair of legs 7068 are completely positioned within the length envelope 7061 of the outer terminal 7060. In still other embodiments, the overall length 7063 of the outer terminal 7060 (measured parallel to the direction of insertion A) is greater than the overall length 7065 of the inner terminal 7062 (measured parallel to the direction of insertion A). In still other embodiments, both the pinch point 7067 of the inner terminal 7062 and the second pair of legs 7068 fall within the length envelope 7061 of the outer terminal 7060.

As shown in FIG. 19A, the second terminal 7040 is configured to receive the second connector 6037, which is electrically connected to both the outer prongs 7066 and the inner prongs 7070.

While the illustrated inner prongs 7070 are shown being horizontal in nature such that the base or joint 7069 between the prongs 7070 and the prongs 7070 are offset horizontally from one another (e.g., in a direction parallel to the direction of insertion A) and the joint 7069 itself is oriented perpendicular to the direction of insertion (see FIG. 18), it is understood that in other embodiments the prongs 7070 may be vertical in construction. In such an embodiment the joint 7069 and the prongs 7070 are offset vertically (e.g., perpendicular to the direction of insertion A) and the joint itself 7069 is positioned proximate to and extends parallel along the circuit board 18 parallel to the direction of insertion A (see FIG. 18). Such a layout allows for shorter leads extending to the legs 7068. The vertical layout also allows the inner prongs 7070 to match the shape of the connector and maximize contact area for a given length of the terminal.

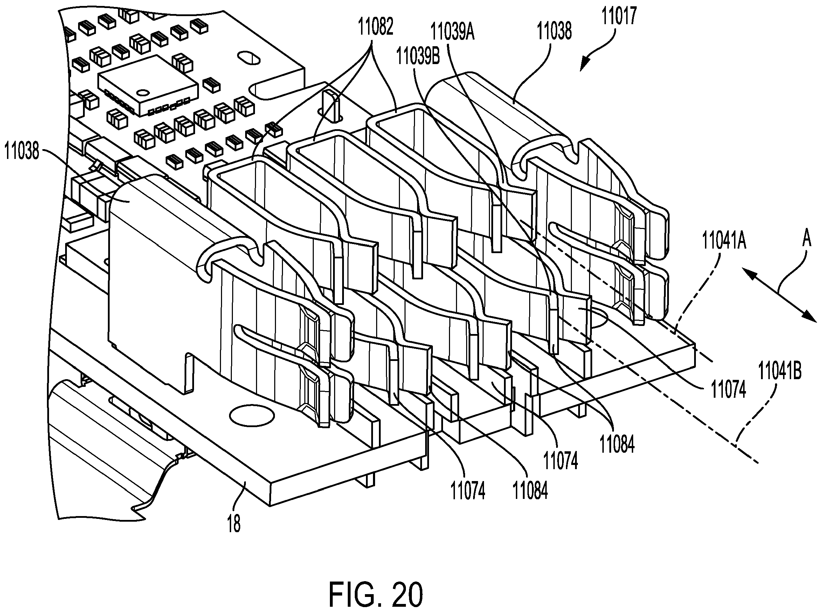

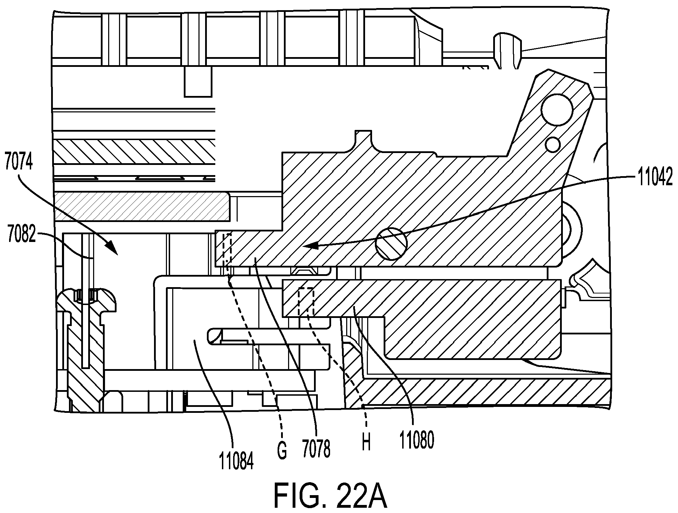

FIG. 20 and 22A-22B illustrate another embodiment of an electrical interface 11017. The electrical interface 11017 is substantially similar to the electrical interface 7017 described above so only the differences will be discussed in detail herein. The electrical interface 11017 may replace the electrical interface 17 in the battery pack 10. The electrical interface 11017 includes one or more first terminals 11038 and one or more second or stacked terminals 11074.

Each first terminal 11038 includes a single electrical connection point (e.g., the first terminal 11038 can form a single electrical circuit) while each second terminal 11074 includes multiple electrical connection points (e.g., the second terminals 11074 may form two or more independent electrical circuits). More specifically, the second terminals 11074 include multiple electrical connection points 11039A, 11039B where each electrical connection point 11039A, 11039B may be individually accessed through the corresponding slot 32 in the battery housing 14 without making an electrical connection with the other connection points 11039A, 11039B. More specifically, each connection point 11039A, 11039B defines an insertion axis 11041A, 11041B (extending parallel to the direction of insertion A) that is offset and unique from the insertion axis 11041A, 11041B of all other electrical connection points 11039A, 11039B. In the illustrated embodiment, the terminal 11074 includes two connection points 11039A, 11039B having two insertion axes 11041A, 11041B that are offset at different distances from the underlying circuit board 18. Stated differently, the first insertion axis 11041A is spaced a first distance from the circuit board 18 while the second insertion axis 11041B is spaced a second distance from the circuit board 18 that is greater than the first distance. Furthermore, in the illustrated embodiment the two insertion axes 11041A, 11041B lie on a common plane that is oriented perpendicular to the circuit board 18.

The second terminal 11074 includes an upper terminal 11082 forming the first electrical connection point 11039A, and a lower terminal 11084 forming the second electrical connection point 11039B that is electrically isolated from the first electrical connection point 11039A. As shown in FIG. 20, the upper terminal 11082 defines the first insertion axis 11041A spaced the first distance from the circuit board 18 while the lower terminal 11084 defines the second insertion axis 11041B spaced the second distance from the circuit board 18 that is less than the first distance. Furthermore, the upper terminal 11082 also has a larger insertion distance than the insertion distance of the lower terminal 11084.

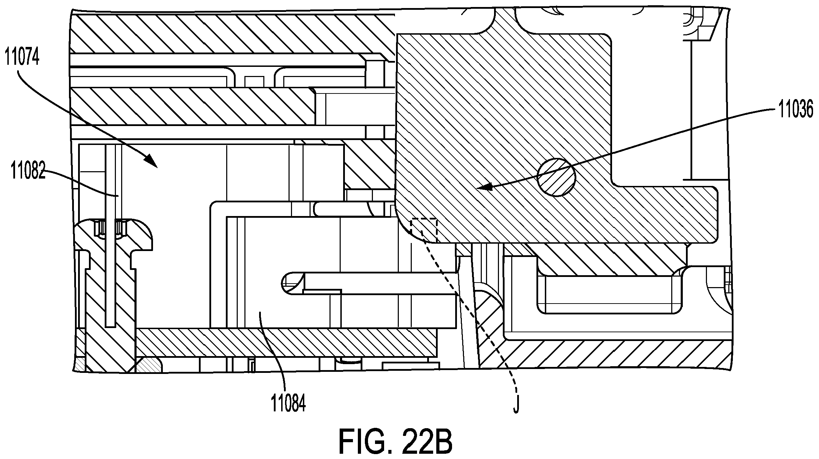

During use, if the stacked terminal 11074 receives the split connector 11042, as shown in FIG. 22A (described below), the upper terminal 11082 is configured to receive the upper connector 11078 (see connection G) and the lower terminal 11084 is configured to receive the lower connector 11080 (see connection H). If the stacked terminal 11074 receives the first connector 11036, as shown in FIG. 22B (described below), the lower terminal 11084 receives and electrically connects the first connector 11036 and the upper terminal 11082 is left unconnected (see connection J).

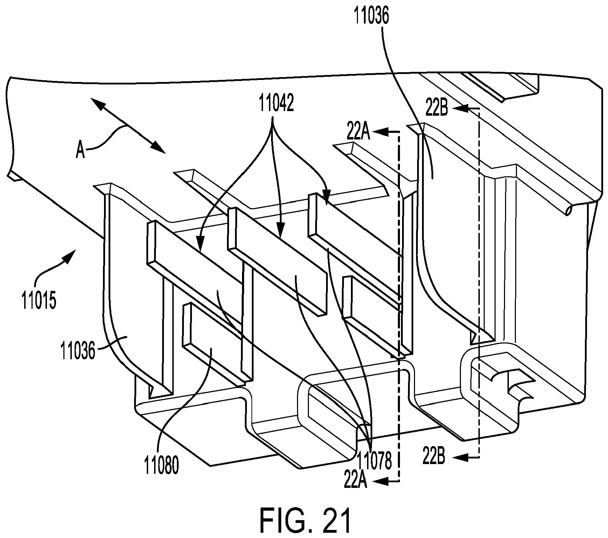

FIG. 21 illustrates another embodiment of mounting point 11015 of the power tool 12. The mounting point 11015 is substantially similar to the mounting point 15 described above so only the differences will be described in detail herein. The mounting point 11015 includes one or more split connectors 11042 and one or more first connectors 11036. Each split connector 11042 includes a plurality of individual and electrically isolated connection elements 11078, 11080, each extending generally parallel to the direction of insertion A but offset from each other. More specifically, the individual connection elements 11078, 11080 are positioned such that, when the battery 10 is being coupled to the mounting point 11015 of the power tool 12 in the direction of insertion A, each connection element 11078, 11080 will correspond with and be coaxial to a corresponding insertion axis 11041A, 11041B. Each connection element 11078, 11080 also has an insertion length that corresponds to the insertion depth of the corresponding terminals 11082, 11084.

Each first connector 11036 forms a single electrical connection point. During use, the first terminals 11038 are configured to receive the first connector 11036 therein. In some embodiments, the connectors 11036 have a connector height (e.g., perpendicular to the direction of insertion A) that is large enough to overlap both the upper terminal 11082 and the lower terminal 11084 of the split terminal 11074. As such, the first connector 11036 may be configured to make an electrical connection with one or both terminals 11082, 11084 of the split terminal 11074 dependent upon its insertion distance. In such embodiments, where the insertion distance of any one connector 11036 exceeds the insertion lengths of both terminals 11082, 11084 the connector may make an electrical connection with both terminals 11082, 11084 simultaneously, however in other embodiments where the insertion distance is greater than the insertion depth of one terminal but less than the insertion depth of the other the first connector 11036 may only make an electrical connection with the shallower of the two terminals.

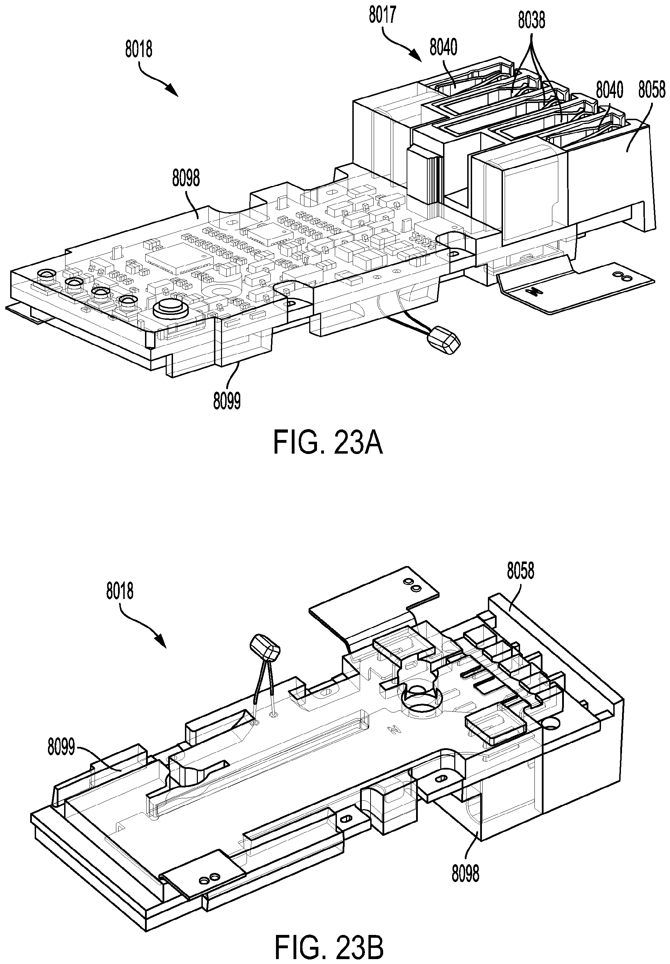

FIGS. 23A-B illustrate another embodiment of a circuit board 8018. The circuit board 8018 is substantially similar to the circuit board 18 described above so only the difference will be described in detail herein. The circuit board 8018 may replace the circuit board 18 in the battery pack 10. The circuit board 8018 includes a electrical interface 8017 containing one or more first terminals 8038, one or more second terminals 8040, and a terminal separator 8058. The circuit board 8018 also includes an upper PCB cover 8098, and lower PCB cover 8099. A rear of the second terminals 8040 is surrounded by the upper PCB cover 8098. The upper PCB cover 8098 is made from a thermal conductive but electrically non-conductive material. The upper PCB cover 8098 is configured to dissipate heat generated on the rear end of the second terminal 8040. The lower PCB cover 8099 is also made from the same material as the upper PCB cover 8098 and is configured to dissipate heat from a pair of legs 8064 of the second terminal 8040. Additionally, the upper and lower PCB covers 8098, 8099 are manufactured using low pressure over molding.

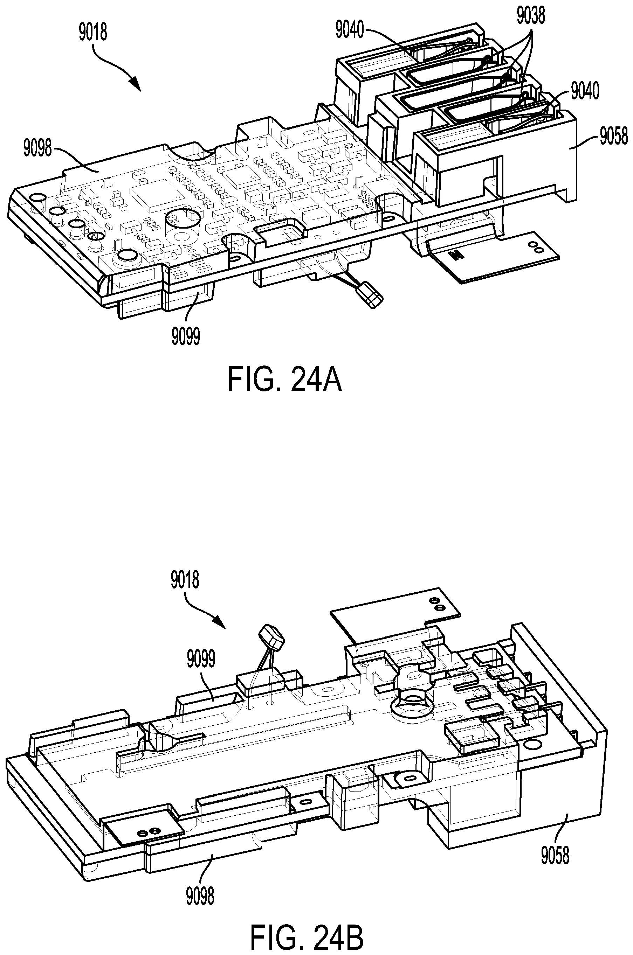

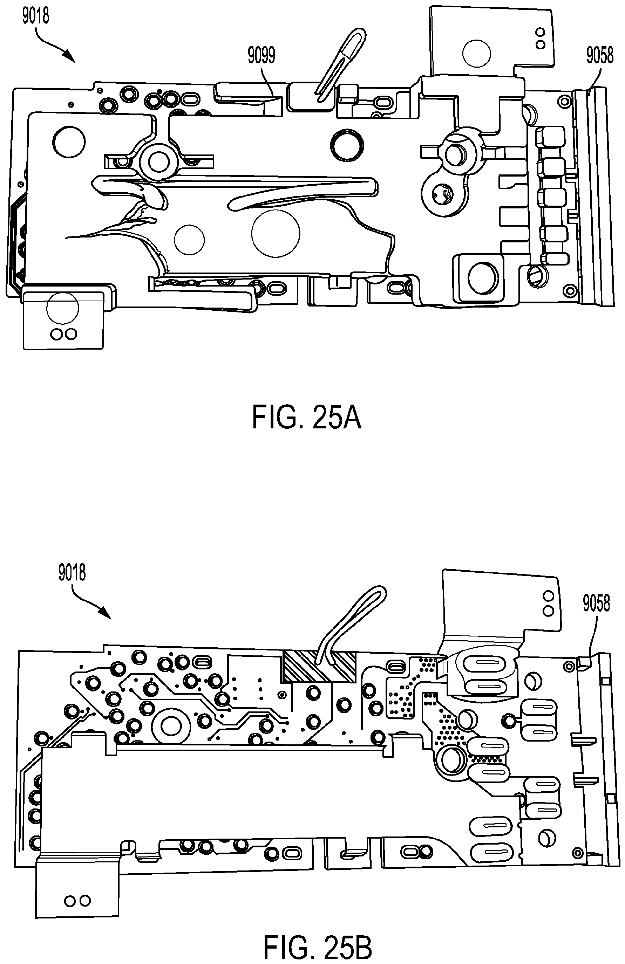

FIG. 24A-B illustrate another embodiment of a circuit board 9018. The circuit board 9018 includes like components to circuit board 8018 so only the differences will be described in detail herein. The upper PCB cover 9098 and a lower PCB cover 9098 are thicker than the upper and lower PCB covers 8098, 8099. The additional material on the upper and lower PCB covers 9098, 9099 increase the thermal mass and have greater heat dissipation potential than the upper and lower PCB cover 9098, 9099. FIG. 25A illustrates the lower PCB cover 9099, while FIG. 25B illustrates the circuit board 9018 with the lower PCB cover 9099 removed.

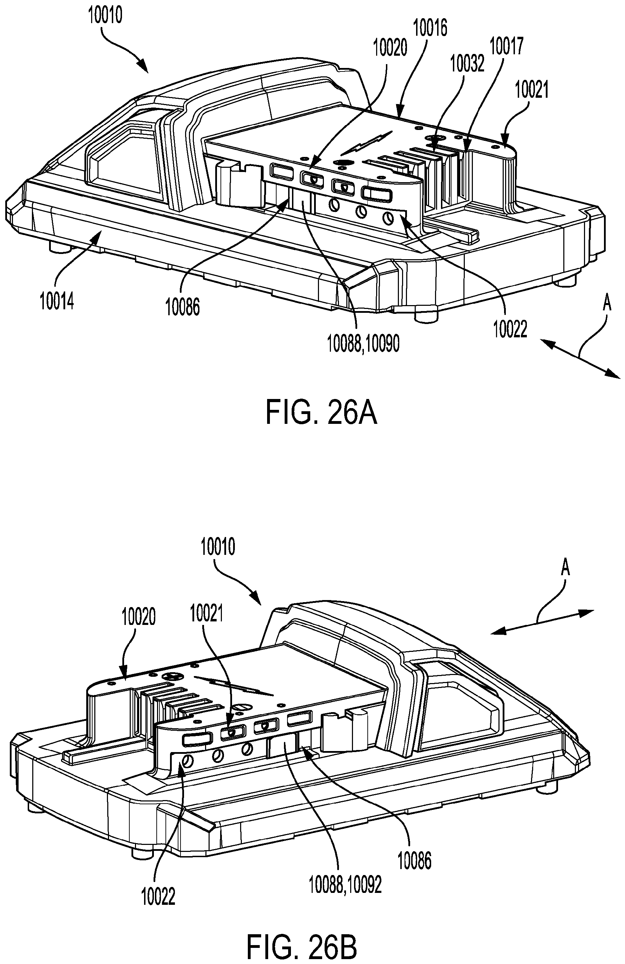

FIGS. 26A-29 illustrate another embodiment of a battery pack 10010. The battery pack 10010 is substantially similar to the battery pack 10 described above so only the differences will be described in detail herein. As shown in FIGS. 26A-B, the battery pack 10010 includes a housing 10014, a tool engagement portion 10016, a circuit board 10018, one or more battery cells (not shown), and an electrical interface 10017 in electrical communication with both the circuit board 10018 and the one or more battery cells. The tool engagement portion 10016 includes a first spaced apart housing wall or rib 10020 extending parallel the direction of insertion A and a second spaced apart housing wall or rib 10021 also extending parallel to the direction of insertion A. The first and second ribs 10020,10021 each define a groove 10022 that also extends parallel to the direction of insertion A. The grooves 10022, in turn, each include at least one window 10086 open to the internal cavity of the housing 10014 of the battery pack 10010. During use, the grooves 10022 are configured to receive a rail 10030 from the power tool 10012 therein when the battery pack 10010 is coupled to the power tool 10012. In other embodiments, the groove 10022 may be formed into the power tool 12 while the rail 10030 may be positioned on the battery pack 10010.

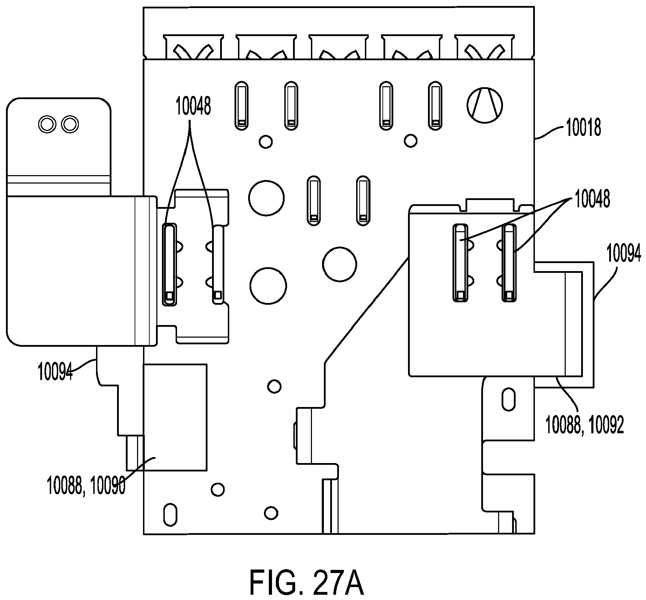

As shown in FIGS. 27A-C, the circuit board 100018 of the battery pack 100010 includes a plurality of first terminals 100038 and a plurality of lateral terminals 10088 set at an angle relative to the first terminals 10038. More specifically, each of the first terminals 10038 may be accessed via a slot 10032 formed in the housing 10014 of the battery pack 10010 that is at least partially oriented normal to the direction of insertion A (e.g., the connector is introduced parallel to the direction of insertion A). In contrast, the lateral terminals 10088 are accessible via a window 10086 that is not oriented normal to the direction of insertion A. In the illustrated embodiment, the window 10086 providing access to the lateral terminals 10088 are oriented parallel to the direction of insertion A and completely positioned within one of the two grooves 10022.

During use, each of the first terminals 10038 are configured to receive a connector 10036 of the power tool 10012. More specifically, each first connector 10036 is configured to be inserted into the terminal 10038 in the direction of insertion A. In contrast, the lateral terminals 10088 are disposed in the windows 10086 of the grooves 10022 and are configured to receive a plurality of lateral connectors 10089 from the power tool 10012. During use, the lateral connectors 10089 are configured to come into sliding contact with the lateral terminals 10088 (e.g., slide along the surface of the terminal 10088 that is oriented parallel to the direction of insertion A) whereby a biasing force acting perpendicular to the direction of insertion A presses or otherwise forces the connector 10089 into contact with the terminal 10088. In the illustrated embodiment, the connector 10089 is configured to exert the contacting force (e.g., inwardly toward the terminal 10088) to produce the desired contact but in other embodiments the terminal 10088 may be biased outwardly into engagement with the connector 10089. In still other embodiments, both the connector 10089 and the terminal 10088 may be biased into engagement with each other.

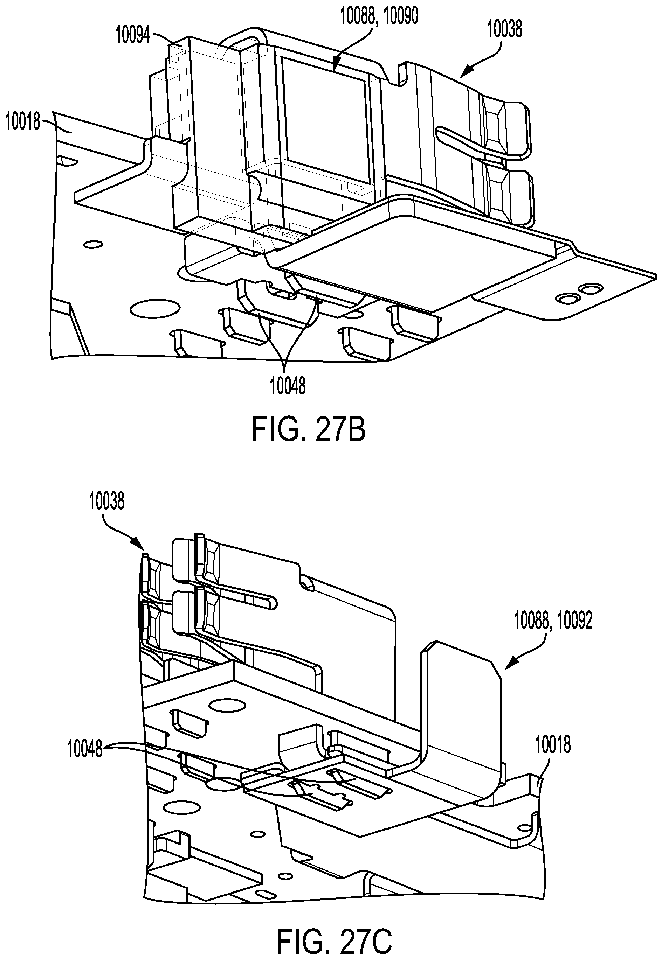

As shown in FIGS. 26A and 27B, a positive lateral terminal 10090 of the plurality of lateral terminals 10088 is positioned on the first spaced apart wall 10020 and is soldered to a distinct area of the circuit board 10018. In this configuration, the positive lateral terminal 10090 can be operated separately from any of the first terminals 10038. As shown in FIG. 26B and 27C, a negative lateral terminal 10092 of the plurality of lateral terminal 10088 is positioned on the second spaced apart wall 10021 and is soldered to a first pair of legs 10048 of one of the first terminals 10038. In this configuration, the lateral terminal 10088 is connected in parallel to at least one of the first terminals 10038.

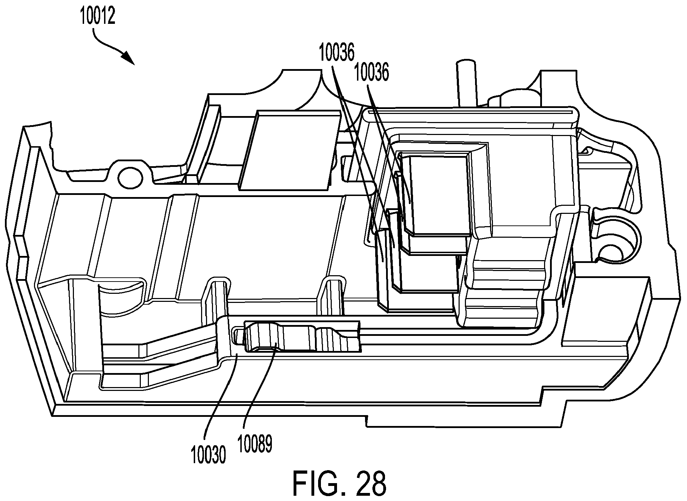

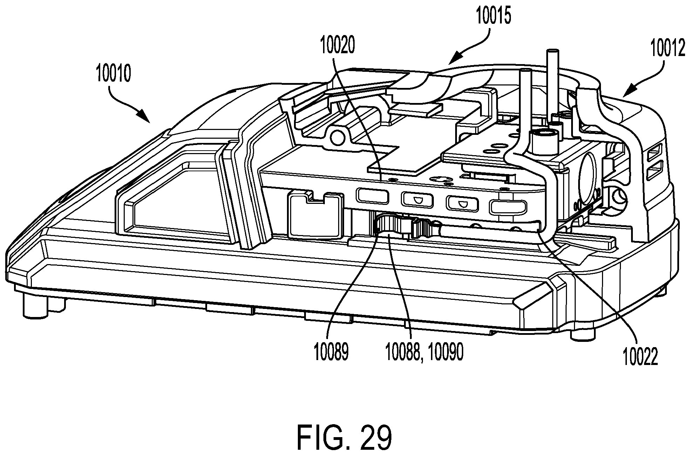

FIGS. 28 and 29 show that the lateral connectors 10089 are disposed in the rail 10030 of the mounting point 10015 and are configured to engage the lateral terminals 10088 when the battery pack 10010 is fully installed on the power tool 10012.

As shown in FIG. 27B, the positive lateral terminal 10090 includes a shield 10094 to isolate the lateral terminal 10088 physically and electrically from the first terminals 10038. The shield 10094 prevents a short circuit in between the lateral terminals 10088 and the first terminal 10038 and seals the internal cavity of the battery pack 10010 from dust and debris entering through the windows 10086.

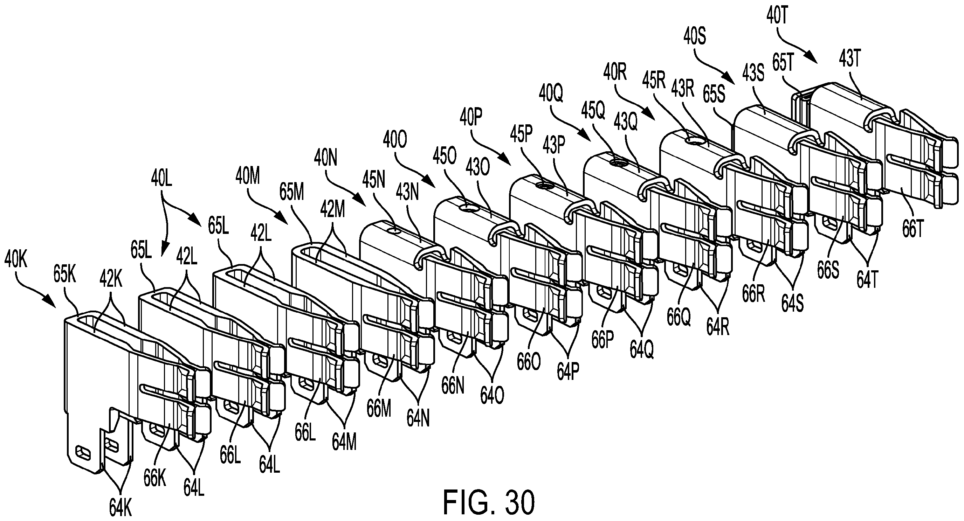

FIG. 30 shows various alternate embodiments of a terminal 40K-U. The second terminals 40K-U may replace any of the previously described terminals. The terminal 40K includes a pair of spaced apart terminal walls 42K, a pair of legs 64K, a rear wall 65K, a pair of prongs 66K. The spaced apart terminals walls 42K have a greater thickness than the pair of prongs 66K. The terminal 40L includes like components to the second terminal 40K, but a pair of prongs 66L and a pair of spaced apart walls 65L, 42L have an equal thickness. The terminal 40M includes like components to the terminals 40K, 40L, but the transition between a pair spaced apart terminal walls 42M and a rear wall 65M has a larger radius of curvature than the second terminals 40K, 40L. Additionally, the prongs 66M decrease in thickness as they extend further from the spaced apart terminal walls 42M. The terminal 40N includes like components to the terminals 40K-M, but includes a pair of bridged terminal walls 43N instead of spaced apart terminal walls 42K-M. The bridged walls 43N also include a through hole 45N on a top surface and does not include the rear wall. The terminal 400 includes like components to the second terminal 40N, but a through hole 450 is counterbored. The terminal 40P includes like components to the terminals 40N and 400, but a thickness of a pair of bridged terminal walls 43P is larger than the thickness of the corresponding prongs 66P. The terminal 40Q includes like components to the terminals 40N-P, but a through hole 45Q includes a curved countersink. The terminal 40R includes like components to the terminals 40N-Q, but a through hole 45R includes a countersink. The terminal 40S includes like components to the second terminals 40N-R, but does not include the through hole in the bridged wall 43S. However, the terminal 40S includes a rear wall 65S. The terminal 40T includes like components to the terminal 40S but includes a rear wall 65T with multiple layers of sheet metal.

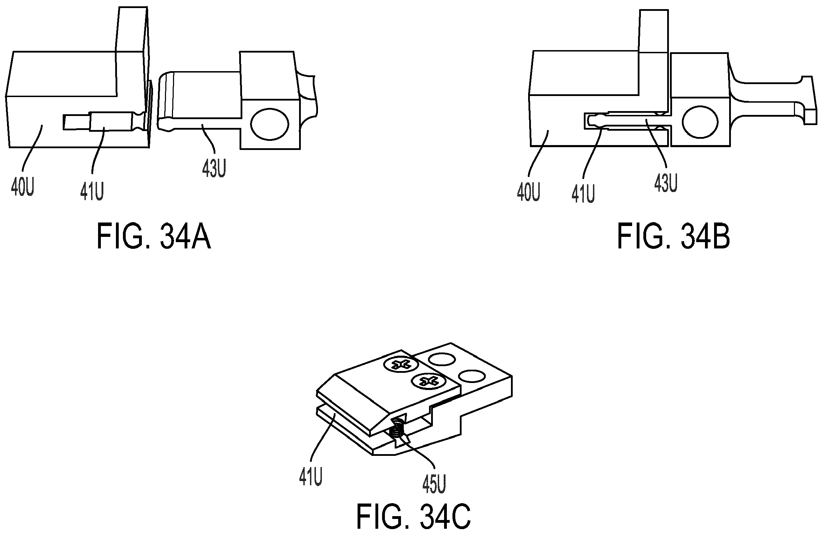

FIGS. 34A-34C illustrate alternative embodiments of a terminal 40U. More specifically, the terminal 40U is generally formed from a solid piece of metallic material (e.g., copper, aluminum, and the like) and is assembled and/or machined to define a groove 41U therein that is sized to receive a corresponding blade or connector 43U. By being formed of solid materials instead of sheet materials (e.g., metals) the illustrated terminals 40U are able to accommodate relatively larger current rates. As shown, the resulting groove 41U may be supplemented with a spring 45U (e.g., a canted spring) positioned therein to help retain the blade 43U therein (see FIG. 34C). In still other embodiments, the material forming the terminal 40U may be coated such as with gold and the like to reduce current resistance and corrosion.

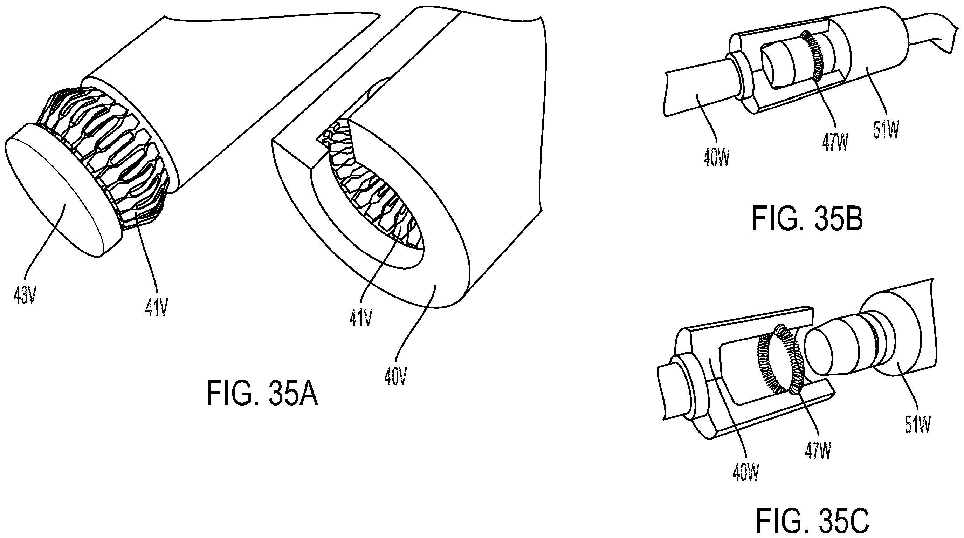

FIGS. 35A-35C illustrate alternative embodiments of a terminal 40V, 40W that are generally cylindrical in construction. The first terminal 40V includes a series of pivotable conductors 41V movably attached to the terminal 40V for accommodating any variations in size or position between the male connector 43V and the female terminal 40V. While the illustrated construction of FIG. 35A shows both the connector 43V and the terminal 40V having the conductors 41V included therein, it is understood that in other embodiments only one or the other may include such conductors 41V.

FIG. 35B and 35C illustrate another embodiment where a coiled spring 47W (e.g., a canted spring) is incorporated into one of the terminal 40W or the connector 51W. The coiled spring 47W operates as discussed above and is configured to both help retain the connector 51W within the terminal 40W as well as improve the conductivity between the two elements.

When used in this specification and claims, the terms "comprises" and "comprising" and variations thereof mean that the specified features, steps or integers are included. The terms are not to be interpreted to exclude the presence of other features, steps or components.

Various features and advantages of the invention are set forth in the following claims.

### REPRESENTATIVE FEATURES

Representative features are set out in the following clauses, which stand alone or may be combined, in any combination, with one or more features disclosed in the text and/or drawings of the specification.
1. A battery pack for use with a power tool having an electric connector, the battery pack comprising:
   a housing containing one or more battery cells;
   a first terminal in electrical communication with the battery cells, the first terminal including a pair of spaced apart terminal walls forming a gap therebetween and a coil spring at least partially positioned within the gap, wherein the coil spring is configured to selectively engage and form an electrical connection with the electric connector of the power tool when the electric connector is at least partially positioned within the gap.
2. The battery pack of clause 1, wherein the coil spring is canted.
3. The battery pack of clause 1, wherein the electric terminal is introduced into the gap in a first insertion direction, and wherein the coil spring is canted such that it produces a compression direction that is perpendicular to the direction of insertion.
4. The battery pack of clause 1, wherein the battery pack further includes a circuit board disposed in the housing that is in electrical communication with the one or more battery cells and the first terminal.
5. The battery pack of clause 4, wherein the first terminal includes a pair of legs mounted to the circuit board.
6. The battery pack of clause 1, wherein at least one terminal wall defines a groove therein, and wherein the spring is at least partially positioned within the groove.
7. The battery pack of clause 6, wherein both terminal walls define a groove therein, and wherein the spring is at least partially positioned in both grooves.
8. The battery pack of clause 1, wherein the first terminal defines a midplane positioned equidistant from both terminal walls, and wherein the coil spring is positioned on both sides of the midplane.
9. The battery pack of clause 1, wherein the coil spring is arranged in a U-shape.
10. A battery pack for use with a power tool having an electric connector, the battery pack comprising:
   a housing containing one or more battery cells therein;
   a terminal in electrical communication with the battery cells, the terminal configured to receive and form an electrical connection with the electrical connector of the power tool, the terminal including:
      a pair of outer prongs, and
      a pair of inner prongs nested between the pair of outer prongs.
11. The battery pack of clause 10, wherein the pair of outer prongs have a different shape than the pair of inner prongs.
12. The battery pack of clause 10, wherein the pair of outer prongs and the pair of inner prongs are both formed from a single piece of monolithic material..
13. The battery pack of clause 10, wherein the pair of outer prongs and the pair of inner prongs are electrically isolated from each other.
14. The battery pack of clause 10, wherein the pair of outer prongs has a first insertion depth, wherein the pair of inner prongs has a second insertion depth, and wherein the first insertion depth is less than the second insertion depth.
15. The battery pack of clause 10, wherein the pair of outer prongs define a first insertion axis parallel to a direction of insertion, wherein the pair of inner prongs define a second insertion axis parallel to a direction of insertion, and wherein the first insertion axis is not co-axial with the second insertion axis.
16. The battery pack of clause 15, wherein the pair of outer prongs and the pair of inner prongs are both coupled to a circuit board, wherein the first insertion axis is spaced a first distance from the circuit board, and wherein the second insertion axis is spaced a second distance from the circuit board that is greater than the first distance.
17. The battery pack of clause 15, wherein the pair of outer prongs has a different insertion depth than the pair of inner prongs.
18. The battery pack of clause 10, further comprising a second terminal in electrical communication with the battery cells, and wherein the second terminal is different than the first terminal.
19. The battery pack of clause 10, wherein the pair of inner prongs are interdigitated.
20. A battery pack for use with a power tool having an electrical connector, the battery pack comprising:
   a housing containing one or more battery cells therein, the housing having a tool engagement portion configured to releasably engage the power tool and define a direction of insertion; and
   a lateral terminal configured to form an electrical connection with the electrical connector of the power tool, wherein the lateral terminal is accessible through the housing via a window, and wherein the window is oriented parallel to the direction of insertion.
21. The battery pack of clause 20, wherein the housing further defines a pair of grooves configured to mechanically engage and retain a portion of the power tool therein, wherein the grooves extend parallel to the direction of insertion.
22. The battery pack of clause 21, wherein the window is positioned in one of the pair of grooves.
23. The battery pack of clause 21, further comprising one more terminals positioned between the pair of grooves.
24. The battery pack of clause 20, further comprising one or more terminals accessible via openings in the housing, and wherein the openings in the housing are at least partially oriented normal to the axis of insertion.

## Claims

1. A battery pack for use with a power tool having an electric connector, the battery pack comprising:
a housing containing one or more battery cells therein;
a terminal in electrical communication with the battery cells, the terminal configured to receive and form an electrical connection with the electrical connector of the power tool, the terminal including:
a pair of outer prongs, and
a pair of inner prongs nested between the pair of outer prongs.

2. The battery pack of claim 1,
wherein the pair of outer prongs have a different shape than the pair of inner prongs, and/or
wherein the pair of outer prongs and the pair of inner prongs are both formed from a single piece of monolithic material, and/or
wherein the pair of outer prongs and the pair of inner prongs are electrically isolated from each other.

3. The battery pack of claim 1 or 2,
wherein the pair of outer prongs has a first insertion depth, wherein the pair of inner prongs has a second insertion depth, and wherein the first insertion depth is less than the second insertion depth, and/or
wherein the pair of outer prongs define a first insertion axis parallel to a direction of insertion, wherein the pair of inner prongs define a second insertion axis parallel to a direction of insertion, and wherein the first insertion axis is not co-axial with the second insertion axis.

4. The battery pack of claim 3,
wherein the pair of outer prongs and the pair of inner prongs are both coupled to a circuit board, wherein the first insertion axis is spaced a first distance from the circuit board, and wherein the second insertion axis is spaced a second distance from the circuit board that is greater than the first distance,
and/or wherein the pair of outer prongs has a different insertion depth than the pair of inner prongs.

5. The battery pack of any one of claims 1 to 4,
further comprising a second terminal in electrical communication with the battery cells, and wherein the second terminal is different than the first terminal.

6. The battery pack of any one of claims 1 to 5, wherein the pair of inner prongs are interdigitated.

7. A battery pack for use with a power tool having an electric connector, the battery pack comprising:
a housing containing one or more battery cells;
a first terminal in electrical communication with the battery cells, the first terminal including a pair of spaced apart terminal walls forming a gap therebetween and a coil spring at least partially positioned within the gap, wherein the coil spring is configured to selectively engage and form an electrical connection with the electric connector of the power tool when the electric connector is at least partially positioned within the gap.

8. The battery pack of claim 7,
wherein the coil spring is canted, and/or
wherein the electric terminal is introduced into the gap in a first insertion direction, and wherein the coil spring is canted such that it produces a compression direction that is perpendicular to the direction of insertion.

9. The battery pack of claim 7 or 8, wherein the battery pack further includes a circuit board disposed in the housing that is in electrical communication with the one or more battery cells and the first terminal,
preferably wherein the first terminal includes a pair of legs mounted to the circuit board.

10. The battery pack of any one of claims 7 to 9, wherein at least one terminal wall defines a groove therein, and wherein the spring is at least partially positioned within the groove,
preferably wherein both terminal walls define a groove therein, and wherein the spring is at least partially positioned in both grooves.

11. The battery pack of any one of claims 7 to 10,
wherein the first terminal defines a midplane positioned equidistant from both terminal walls, and wherein the coil spring is positioned on both sides of the midplane, and/or
wherein the coil spring is arranged in a U-shape.

12. A battery pack for use with a power tool having an electrical connector, the battery pack comprising:
a housing containing one or more battery cells therein, the housing having a tool engagement portion configured to releasably engage the power tool and define a direction of insertion; and
a lateral terminal configured to form an electrical connection with the electrical connector of the power tool, wherein the lateral terminal is accessible through the housing via a window, and wherein the window is oriented parallel to the direction of insertion.

13. The battery pack of claim 12, wherein the housing further defines a pair of grooves configured to mechanically engage and retain a portion of the power tool therein, wherein the grooves extend parallel to the direction of insertion.

14. The battery pack of claim 13, wherein the window is positioned in one of the pair of grooves and/or further comprising one more terminals positioned between the pair of grooves.

15. The battery pack of any one of claims 12 to 14, further comprising one or more terminals accessible via openings in the housing, and wherein the openings in the housing are at least partially oriented normal to the axis of insertion.
